# EUROPEAN PATENT APPLICATION

(11) **EP 4 790 971 A1**
(43) Date of publication of application: **12.08.2026**
(21) Application number: 24878963.8
(22) Date of filing: 14.10.2024
(51) Int. Cl.: H04L 67/60

(54) **METHOD FOR CLIENT TO ACCESS NETWORK FILE SYSTEM AND RELATED APPARATUS**

(30) Priority: 16.10.2023 CN 202311341503
(71) Applicant: Huawei Technologies Co., Ltd., Shenzhen, Guangdong 518129 (CN)
(72) Inventor: CHENG, Wenhao, Shenzhen, Guangdong 518129 (CN); LIU, Shuo, Shenzhen, Guangdong 518129 (CN); WANG, Qiaoling, Shenzhen, Guangdong 518129 (CN); LUO, Xianqiang, Shenzhen, Guangdong 518129 (CN)
(74) Representative: Thun, Clemens
(86) International application number: PCT/CN2024/124745
(87) International publication number: WO 2025/082319

(57) **Abstract**

This application provides a method for accessing a network file system by a client and a related apparatus. The method is applied to the NFS field. The method includes: The client establishes a full connection to each node in a cloud storage cluster; when the client sends an NFS request to the storage cluster through a network device, the network device determines a home node of the NFS request, and sends the NFS request to the home node; and the home node performs file transfer with the client based on the NFS request, and sends a request completion instruction to the client. According to the method provided in this application, a communication connection is established between the client and the home node, so that transmission of files and instructions can be performed without forwarding by another node in the storage cluster, thereby reducing internal bandwidth consumption of the storage cluster and improving efficiency of request handling by the storage cluster.

## Description

This application claims priority to Chinese Patent Application No. 202311341503.0, filed with the China National Intellectual Property Administration on October 16, 2023 and entitled "METHOD FOR ACCESSING NETWORK FILE SYSTEM BY CLIENT AND RELATED APPARATUS", which is incorporated herein by reference in its entirety.

### TECHNICAL FIELD

This application relates to the field of network file systems, and in particular, to a method for accessing a network file system by a client and a related apparatus.

### BACKGROUND

Network file system (network file system, NFS) is a protocol used for sharing files over a network, and also a type of distributed file system. NFS allows clients to access remote file storage space over a network in a same way as if they were accessing a local file system.

NFS involves clients and a cloud storage cluster. The storage cluster includes a plurality of storage nodes in which files are stored. When a client needs to access a file in an NFS storage cluster, a common approach is as follows: First, the client establishes a single connection to one storage node in the NFS storage cluster, for example, a request access node. Then, the client sends an NFS request to the request access node. The request access node determines a home node of the NFS request based on information carried in the NFS request, and forwards the NFS request to the home node. The home node performs corresponding handling based on the NFS request, and returns a handling result to the request access node. The request access node returns the handling result to the client, and sends a completion instruction to the client. For example, if the client wants to read a file from the NFS storage cluster, the client sends a read request to the request access node. After receiving the read request, the request access node determines, based on the read request, that a home node corresponding to the read request is a storage node 1. Then, the request access node forwards the read request to the storage node 1. The storage node 1 sends the to-be-read file to the request access node based on the read request, and the request access node returns the to-be-read file and a completion instruction to the client.

In the foregoing method, when the client accesses a file in the NFS storage cluster, both an NFS request and a file accessed by using the NFS request need to be forwarded by the request access node. When the NFS storage cluster receives a large quantity of NFS requests, this consumes bandwidth between a plurality of storage nodes and degrades the NFS storage cluster's ability to handle the NFS requests.

### SUMMARY

This application provides a method for accessing a network file system by a client and a related apparatus. According to the method in this application, internal bandwidth consumption of a storage cluster is reduced, and efficiency of NFS request handling by the storage cluster is improved.

According to a first aspect, this application provides a method for accessing a network file system NFS by a client. The NFS includes a request access node and a plurality of storage nodes, the plurality of storage nodes include a first storage node, and the plurality of storage nodes store files; and the method includes: The first storage node receives, based on a connection established between the first storage node and the client, an NFS request sent by the client; and the first storage node obtains, based on the connection, a file corresponding to the NFS request from the client; or the first storage node sends, based on the connection, a file corresponding to the NFS request to the client.

When the communication connection is established between the client and the first storage node, the client may send a request to the first storage node in a storage cluster, and the first storage node may also send data (files) to the client. Transmission of requests, data, instructions, and the like is performed without forwarding by another node in the storage cluster. When a single connection is established between the client and the request access node in the storage cluster, forwarding performed by the request access node is required when the client communicates with another storage node in the storage cluster. By comparison, according to the method in this application, internal bandwidth consumption of the storage cluster is reduced, and efficiency of request handling by the storage cluster is improved.

According to the first aspect, in a possible implementation, the NFS request is a write request, and that the first storage node obtains, based on the connection, the file corresponding to the NFS request from the client includes: The first storage node sends a read request to the client based on the connection, where the read request is used to read the file corresponding to the NFS request; and the first storage node receives, based on the connection, the file corresponding to the NFS request sent by the client.

According to the first aspect, in a possible implementation, the NFS request is a read request, and that the first storage node sends, based on the connection, the file corresponding to the NFS request to the client includes: The first storage node sends a write request to the client based on the connection, where the write request is used to write the file corresponding to the NFS request, and the write request includes the file corresponding to the NFS request.

According to the first aspect, in a possible implementation, before that the first storage node receives, based on the connection established between the first storage node and the client, the NFS request sent by the client, the method further includes: The first storage node establishes the connection to the client through the request access node.

According to the first aspect, in a possible implementation, that the first storage node establishes the connection to the client through the request access node includes: The first storage node receives a connection management CM request sent by the request access node, where the CM request is sent by the client to the request access node; and the first storage node establishes the connection to the request access node based on the CM request, so that the request access node returns a CM reply to the client.

According to the first aspect, in a possible implementation, a queue pair QP0 is set on the client, a queue pair QP1 and a queue pair QP2 are set on the request access node, and a queue pair QP3 is set on the first storage node.

The method includes:
the QP3 on the first storage node receives the connection management CM request sent by the QP2 on the request access node, where the CM request is sent by the QP0 on the client to the QP1 on the request access node; and
the QP3 on the first storage node establishes the connection to the QP2 on the request access node based on the CM request, so that the QP1 on the request access node returns the CM reply to the QP0 on the client.

According to the first aspect, in a possible implementation, the first storage node establishes the connection to the client through the request access node according to a remote direct memory access RDMA protocol.

According to a second aspect, this application provides a method for accessing a network file system NFS by a client. The method is applied to a network device, the network device is configured for communication between the client and the NFS, the NFS includes a request access node and a plurality of storage nodes, and the plurality of storage nodes include a first storage node; and the method includes:

The network device receives an NFS request sent by the client;
in response to determining that a home node corresponding to the NFS request is the first storage node, the network device sends the NFS request to the first storage node; and
the network device sends, to the first storage node based on pre-configuration information, a file corresponding to the NFS request sent by the client; or the network device sends, to the client based on the pre-configuration information, a file corresponding to the NFS request sent by the first storage node.

In this application, functions of the network device include: (1) determining the home node corresponding to the NFS request; and (2) implementing transmission of requests, files, and instructions between the client and the first storage node based on the pre-configuration information. The function of determining the home node corresponding to the NFS request is set in the network device for implementation, so that NFS semantic routing is implemented, request forwarding is reduced, and NFS request handling performance is improved.

According to the second aspect, in a possible implementation, the NFS request is a write request, and that the network device sends, to the first storage node based on the pre-configuration information, the file corresponding to the NFS request sent by the client includes: The network device sends, to the client based on the pre-configuration information, a read request sent by the first storage node, where the read request is used to read the file corresponding to the NFS request; and the network device sends, to the first storage node based on the pre-configuration information, the file corresponding to the NFS request sent by the client.

For the client, the client considers that a reliable connection is established between the client and the request access node, and therefore the client sends the NFS request to the request access node. However, actually, the request access node acts as a "bridge", and the client establishes the communication connection to the first storage node through the request access node. Therefore, the pre-configuration information needs to be set, and the network device forwards, to the first storage node, the NFS request sent by the client to the request access node. Similarly, the first storage node considers that a connection is established between the first storage node and the request access node, and therefore the first storage node sends the request or the file to the request access node. However, actually, the request access node acts as a "bridge", and the first storage node establishes the communication connection to the client through the request access node. Therefore, the pre-configuration information needs to be set, and the network device forwards, to the client, the NFS request sent by the first storage node to the request access node.

According to the second aspect, in a possible implementation, the NFS request is a read request, and that the network device sends, to the client based on the pre-configuration information, the file corresponding to the NFS request sent by the first storage node includes: The network device sends, to the client based on the pre-configuration information, a write request sent by the first storage node, where the write request is used to write the file corresponding to the NFS request, and the write request includes the file corresponding to the NFS request.

According to the second aspect, in a possible implementation, before that the network device sends, to the first storage node based on the pre-configuration information, the file corresponding to the NFS request sent by the client; or before that the network device sends, to the client based on the pre-configuration information, the file corresponding to the NFS request sent by the first storage node, the method further includes:
the network device receives the pre-configuration information sent by the request access node, where the pre-configuration information includes first information, second information, and a first mapping relationship between the first information and the second information, where the first information includes an address of the request access node, the second information includes an address of the first storage node, and the first mapping relationship indicates to trigger, when the network device receives a read request or a write request sent by the client, and a destination address of the read request or the write request is the first information, the network device to copy and forward the read request or the write request to the storage node indicated by the second information; and
the pre-configuration information further includes third information, fourth information, and a second mapping relationship between the third information and the fourth information, where the third information includes the address of the request access node, the fourth information includes an address of the client, and the second mapping relationship indicates to trigger, when the network device receives a packet sent by the first storage node, and a destination address of the packet is the third information, the network device to copy and forward the packet to the device indicated by the fourth information.

According to the second aspect, in a possible implementation, that the network device sends, to the first storage node based on the pre-configuration information, the file corresponding to the NFS request sent by the client includes:
the network device receives the file corresponding to the NFS request sent by the client;
determines that a destination address of the file corresponding to the NFS request is the address of the request access node; and
in response to determining that the destination address of the file corresponding to the NFS request is the address of the request access node, copies and forwards the file corresponding to the NFS request to the first storage node; or
that the network device sends, to the client based on the pre-configuration information, the file corresponding to the NFS request sent by the first storage node includes:
   the network device receives the file corresponding to the NFS request sent by the first storage node;
   determines that a destination address of the file corresponding to the NFS request is the address of the request access node; and
   in response to determining that the destination address of the file corresponding to the NFS request is the address of the request access node, copies and forwards the file corresponding to the NFS request to the client.

According to a third aspect, this application provides a method for establishing a connection between a client and a network file system NFS. The NFS includes a request access node and a plurality of storage nodes, the plurality of storage nodes include a first storage node, the plurality of storage nodes store files, and the request access node is configured to receive an NFS request sent by the client; and the method includes:
the request access node receives a connection management CM request sent by the client, where the CM request is used to establish a connection between the client and the first storage node; and
the request access node sends pre-configuration information to a network device, so that the network device enables, based on the pre-configuration information, the client to send a write request or a read request to the first storage node, or so that the network device enables, based on the pre-configuration information, the first storage node to send a write request or a read request to the client.

In a process in which the client establishes the communication connection to the first storage node, the request access node acts as a "bridge". In a process in which the client establishes a reliable connection to the request access node, a reliable connection is established between the request access node and the first storage node, and the request access node notifies the first storage node of a starting packet sequence number of the client and notify the client of a starting packet sequence number of the first storage node. Both the first storage node and the client learn of the starting packet sequence number of each other. On this basis, the network device is preconfigured, so that the client can communicate with the first storage node. In this way, the communication connection between the client and the first storage node is successfully established, and a "material" foundation is laid for subsequent packet transmission between the client and the first storage node.

According to a similar method, a communication connection may be established between another storage node in a storage cluster and the client, so that a full connection between the client and each node in the storage cluster is implemented, to lay a "material" foundation for subsequent communication between the client and each node. The full connection is a technical support through which each storage node in the storage cluster can directly send a packet to the client.

According to the third aspect, in a possible implementation, that the CM request is used to establish the connection between the client and the first storage node includes:
the request access node sends the CM request to the first storage node, and establishes the connection to the first storage node based on the CM request;
the request access node sends a CM reply to the client; and
the request access node receives an acknowledgment returned by the client for the CM reply.

According to the third aspect, in a possible implementation, the pre-configuration information includes first information, second information, and a first mapping relationship between the first information and the second information, where the first information includes an address of the request access node, the second information includes an address of the first storage node, and the first mapping relationship indicates to trigger, when the network device receives a read request or a write request sent by the client, and a destination address of the read request or the write request is the first information, the network device to copy and forward the read request or the write request to the storage node indicated by the second information; and
the pre-configuration information further includes third information, fourth information, and a second mapping relationship between the third information and the fourth information, where the third information includes the address of the request access node, the fourth information includes an address of the client, and the second mapping relationship indicates to trigger, when the network device receives a packet sent by the first storage node, and a destination address of the packet is the third information, the network device to copy and forward the packet to the device indicated by the fourth information.

According to the third aspect, in a possible implementation, a queue pair QP0 is set on the client, a queue pair QP1 and a queue pair QP2 are set on the request access node, and a queue pair QP3 is set on the first storage node; and
that the request access node receives the connection management CM request sent by the client, where the CM request is used to establish the connection between the client and the first storage node includes:
the QP1 on the request access node receives the connection management CM request sent by the QP0 on the client;
the QP2 on the request access node sends the CM request to the QP3 on the first storage node, and establishes the connection to the QP3 on the first storage node based on the CM request;
the QP1 on the request access node sends the CM reply to the QP0 on the client; and
the QP1 on the request access node receives the acknowledgment returned by the QP0 on the client for the CM reply.

According to the third aspect, in a possible implementation, a queue pair QP4 is further set on the client, and a queue pair QP5 is further set on the request access node; and the method further includes: The QP5 on the request access node establishes a connection to the QP4 on the client.

Two flows are established between the client and the request access node. A flow formed by the QP4 and the QP5 is used to establish the reliable connection between the client and the request access node, and a flow formed by the QP0 and the QP1 is actually used to establish the communication connection between the client and the first storage node. The communication connection between the client and the node in the storage cluster is established according to an nconnect technology and a RDMA protocol. nconnect allows establishing of a plurality of flows between two devices, each flow is used for a different purpose, and one flow occupies one core of the device. In this application, the nconnect technology is used to improve bandwidth and packet transmission efficiency.

According to the third aspect, in a possible implementation, a port port0 is set on the client, a port port1 and a port port2 are set on the request access node, and a port port3 is set on the first storage node; and
that the request access node receives the connection management CM request sent by the client, where the CM request is used to establish the connection between the client and the first storage node includes:
the port1 on the request access node receives the connection management CM request sent by the port0 on the client;
the port2 on the request access node sends the CM request to the port3 on the first storage node, and establishes the connection to the port3 on the first storage node based on the CM request;
the port1 on the request access node sends the CM reply to the port0 on the client; and
the port1 on the request access node receives the acknowledgment returned by the port0 on the client for the CM reply.

According to the third aspect, in a possible implementation, a port port4 is further set on the client, and a port port5 is further set on the request access node; and the method further includes: The port5 on the request access node establishes a connection to the port4 on the client.

According to the third aspect, in a possible implementation, the request access node is configured to establish the connection between the first storage node and the client according to a remote direct memory access RDMA protocol or a transmission control protocol TCP.

According to a fourth aspect, this application provides a method for establishing a connection between a client and a cloud network file system NFS. The NFS includes a request access node and a plurality of storage nodes, the plurality of storage nodes store files, and the plurality of storage nodes include a first storage node; and the method includes:
a network device receives pre-configuration information sent by the request access node, so that the network device enables, based on the pre-configuration information, the client to send a write request or a read request to the first storage node, or so that the network device enables, based on the pre-configuration information, the first storage node to send a write request or a read request to the client.

According to the fourth aspect, in a possible implementation, the pre-configuration information includes first information, second information, and a first mapping relationship between the first information and the second information, where the first information includes an address of the request access node, the second information includes an address of the first storage node, and the first mapping relationship indicates to trigger, when the network device receives a read request or a write request sent by the client, and a destination address of the read request or the write request is the first information, the network device to copy and forward the read request or the write request to the storage node indicated by the second information; and
the pre-configuration information further includes third information, fourth information, and a second mapping relationship between the third information and the fourth information, where the third information includes the address of the request access node, the fourth information includes an address of the client, and the second mapping relationship indicates to trigger, when the network device receives a packet sent by the first storage node, and a destination address of the packet is the third information, the network device to copy and forward the packet to the device indicated by the fourth information.

According to a fifth aspect, this application provides a node on a cloud. The node may be configured as a first storage node in a network file system on the cloud, the network file system on the cloud further includes a request access node, and the first storage node includes:
a receiving module, configured to receive, based on a connection established between the first storage node and a client, an NFS request sent by the client, where
the receiving module is further configured to obtain, based on the connection, a file corresponding to the NFS request from the client; or a sending module, configured to send, based on the connection, a file corresponding to the NFS request to the client.

According to the fifth aspect, in a possible implementation, the NFS request is a write request; and
the sending module is configured to send a read request to the client based on the connection, where the read request is used to read the file corresponding to the NFS request; and
the receiving module is configured to receive, based on the connection, the file corresponding to the NFS request sent by the client.

According to the fifth aspect, in a possible implementation, the NFS request is a read request; and
the sending module is configured to send a write request to the client based on the connection, where the write request is used to write the file corresponding to the NFS request, and the write request includes the file corresponding to the NFS request.

According to the fifth aspect, in a possible implementation, the sending module and the receiving module are cooperatively configured to establish the connection to the client through the request access node.

According to the fifth aspect, in a possible implementation, the receiving module is configured to receive a connection management CM request sent by the request access node, where the CM request is sent by the client to the request access node; and
the sending module and the receiving module are cooperatively configured to establish the connection to the request access node based on the CM request, so that the request access node returns a CM reply to the client.

According to the fifth aspect, in a possible implementation, a queue pair QP0 is set on the client, a queue pair QP1 and a queue pair QP2 are set on the request access node, and a queue pair QP3 is set on the first storage node; and
the receiving module is used by the QP3 on the first storage node to receive the connection management CM request sent by the QP2 on the request access node, where the CM request is sent by the QP0 on the client to the QP1 on the request access node; and
the sending module and the receiving module are cooperatively used by the QP3 on the first storage node to establish the connection to the QP2 on the request access node based on the CM request, so that the QP1 on the request access node returns the CM reply to the QP0 on the client.

According to the fifth aspect, in a possible implementation, the sending module and the receiving module are cooperatively configured to establish the connection to the client through the request access node according to a remote direct memory access RDMA protocol.

The functional modules in the fifth aspect are configured to implement the method according to the first aspect and some of the possible implementations of the first aspect.

According to a sixth aspect, this application provides a node on a cloud. The node may be configured as a request access node in a network file system on the cloud, and the network file system on the cloud further includes a first storage node. When the node is configured as the request access node, the request access node includes:
a receiving module, configured to receive a connection management CM request sent by the client, where the CM request is used to establish a connection between the client and the first storage node; and
the sending module is configured to send pre-configuration information to a network device, so that the network device enables, based on the pre-configuration information, the client to send a write request or a read request to the first storage node, or so that the network device enables, based on the pre-configuration information, the first storage node to send a write request or a read request to the client.

According to the sixth aspect, in a possible implementation,
the sending module is configured to send the CM request to the first storage node;
the sending module and the receiving module are cooperatively configured to establish the connection to the first storage node based on the CM request;
the sending module is configured to send a CM reply to the client; and
the receiving module is configured to receive an acknowledgment returned by the client for the CM reply.

According to the sixth aspect, in a possible implementation, the pre-configuration information includes first information, second information, and a first mapping relationship between the first information and the second information, where the first information includes an address of the request access node, the second information includes an address of the first storage node, and the first mapping relationship indicates to trigger, when the network device receives a read request or a write request sent by the client, and a destination address of the read request or the write request is the first information, the network device to copy and forward the read request or the write request to the storage node indicated by the second information; and the pre-configuration information further includes third information, fourth information, and a second mapping relationship between the third information and the fourth information, where the third information includes the address of the request access node, the fourth information includes an address of the client, and the second mapping relationship indicates to trigger, when the network device receives a packet sent by the first storage node, and a destination address of the packet is the third information, the network device to copy and forward the packet to the device indicated by the fourth information.

According to the sixth aspect, in a possible implementation, a queue pair QP0 is set on the client, a queue pair QP1 and a queue pair QP2 are set on the request access node, and a queue pair QP3 is set on the first storage node; and
the receiving module is used by the QP1 on the request access node to receive the connection management CM request sent by the QP0 on the client;
the sending module is used by the QP2 on the request access node to send the CM request to the QP3 on the first storage node;
the receiving module and the sending module are cooperatively configured to establish the connection to the QP3 on the first storage node based on the CM request;
the sending module is used by the QP1 on the request access node to send the CM reply to the QP0 on the client; and
the receiving module is used by the QP1 on the request access node to receive the acknowledgment returned by the QP0 on the client for the CM reply.

According to the sixth aspect, in a possible implementation, a queue pair QP4 is further set on the client, and a queue pair QP5 is further set on the request access node; and the sending module and the receiving module are cooperatively used by the QP5 on the request access node to establish a connection to the QP4 on the client.

According to the sixth aspect, in a possible implementation, a port port0 is set on the client, a port port1 and a port port2 are set on the request access node, and a port port3 is set on the first storage node; and
the receiving module is used by the port1 on the request access node to receive the connection management CM request sent by the port0 on the client;
the sending module is used by the port 2 on the request access node to send the CM request to the port 3 on the first storage node;
the receiving module and the sending module are cooperatively configured to establish the connection to the port 3 on the first storage node based on the CM request;
the sending module is used by the port1 on the request access node to send the CM reply to the port0 on the client; and
the receiving module is used by the port1 on the request access node to receive the acknowledgment returned by the port0 on the client for the CM reply.

According to the sixth aspect, in a possible implementation, a port port4 is further set on the client, and a port port5 is further set on the request access node; and the receiving module and the sending module are cooperatively used by the port port5 to establish a connection to the port port4 on the client.

According to the sixth aspect, in a possible implementation, the receiving module and the sending module are cooperatively configured to establish the connection between the first storage node and the client according to a remote direct memory access RDMA protocol or a transmission control protocol TCP.

The functional modules in the sixth aspect are configured to implement the method according to the third aspect and the possible implementations of the third aspect.

According to a seventh aspect, this application provides a network device. The network device is configured for communication between a client and an NFS, the NFS includes a request access node and a plurality of storage nodes, the plurality of storage nodes store files, and the plurality of storage nodes include a first storage node; and the network device includes:
a receiving module, configured to receive an NFS request sent by the client;
a determining module, configured to determine which storage node is a home node corresponding to the NFS request; and
a sending module, configured to: in response to determining that the home node corresponding to the NFS request is the first storage node, send the NFS request to the first storage node, where
the sending module is configured to: send, to the first storage node based on pre-configuration information, a file corresponding to the NFS request sent by the client; or send, to the client based on the pre-configuration information, a file corresponding to the NFS request sent by the first storage node.

According to the seventh aspect, in a possible implementation, the NFS request is a write request; and
the sending module is configured to:
send, for the network device, to the client based on the pre-configuration information, a read request sent by the first storage node, where the read request is used to read the file corresponding to the NFS request; and
send, to the first storage node based on the pre-configuration information, the file corresponding to the NFS request sent by the client.

According to the seventh aspect, in a possible implementation, the NFS request is a read request; and
the sending module is configured to send, to the client based on the pre-configuration information, a write request sent by the first storage node, where the write request is used to write the file corresponding to the NFS request, and the write request includes the file corresponding to the NFS request.

According to the seventh aspect, in a possible implementation, the receiving module is further configured to:
receive the pre-configuration information sent by the request access node, where the pre-configuration information includes first information, second information, and a first mapping relationship between the first information and the second information, where the first information includes an address of the request access node, the second information includes an address of the first storage node, and the first mapping relationship indicates to trigger, when the network device receives a read request or a write request sent by the client, and a destination address of the read request or the write request is the first information, the network device to copy and forward the read request or the write request to the storage node indicated by the second information; and the pre-configuration information further includes third information, fourth information, and a second mapping relationship between the third information and the fourth information, where the third information includes the address of the request access node, the fourth information includes an address of the client, and the second mapping relationship indicates to trigger, when the network device receives a packet sent by the first storage node, and a destination address of the packet is the third information, the network device to copy and forward the packet to the device indicated by the fourth information.

According to the seventh aspect, in a possible implementation,
the receiving module is configured to receive the file corresponding to the NFS request sent by the client;
the determining module is configured to determine that a destination address of the file corresponding to the NFS request is the address of the request access node; and
the sending module is configured to: in response to determining that the destination address of the file corresponding to the NFS request is the address of the request access node, copy and forward the file corresponding to the NFS request to the first storage node; or
the receiving module is configured to receive the file corresponding to the NFS request sent by the first storage node;
the determining module is configured to determine that a destination address of the file corresponding to the NFS request is the address of the request access node; and
the sending module is configured to: in response to determining that the destination address of the file corresponding to the NFS request is the address of the request access node, copy and forward the file corresponding to the NFS request to the client.

According to the seventh aspect, in a possible implementation, the receiving module is further configured to receive the pre-configuration information sent by the request access node, so that the network device enables, based on the pre-configuration information, the client to send a write request or a read request to the first storage node, or so that the network device enables, based on the pre-configuration information, the first storage node to send a write request or a read request to the client.

The functional modules in the seventh aspect are configured to implement the method according to the second aspect and the possible implementations of the second aspect, or are configured to implement the method according to the fourth aspect and the possible implementations of the fourth aspect.

According to an eighth aspect, this application provides a network device, including a memory and a processor. The memory is configured to store instructions, and the processor is configured to execute the instructions stored in the memory, to implement the method according to the second aspect and the possible implementations of the second aspect, to implement the method according to the fourth aspect and the possible implementations of the fourth aspect, to implement the method according to the thirteenth aspect and the possible implementations of the thirteenth aspect; or to implement the method according to the fifteenth aspect and the possible implementations of the fifteenth aspect.

According to a ninth aspect, this application provides a compute device cluster, including a request access node and a plurality of storage nodes. Any one of the request access node and the plurality of storage nodes includes a memory and a processor, and the processor is configured to execute instructions stored in the memory, to cause the compute device cluster to perform the method according to the first aspect and the possible implementations of the first aspect, to cause the compute device cluster to perform the method according to the third aspect and the possible implementations of the third aspect, to cause the compute device cluster to perform the following method according to twelfth and fourteenth aspects and possible implementations of the twelfth and fourteenth aspects.

According to a tenth aspect, this application provides a system, including a network device and a network file system NFS on a cloud. The NFS includes a request access node and a plurality of storage nodes, the plurality of storage nodes include a first storage node, the plurality of storage nodes store files, the request access node is an ingress node on which a client sends a request to the NFS through the network device, and the system is configured to implement the method according to any one of the first aspect and the possible implementations of the first aspect; the system is configured to implement the method according to any one of the second aspect and the possible implementations of the second aspect, the system is configured to implement the method according to any one of the third aspect and the possible implementations of the third aspect, the system is configured to implement the method according to any one of the fourth aspect and the possible implementations of the fourth aspect; or the system is configured to implement the following method according to any one of twelfth, thirteenth, fourteenth, and fifteenth aspects and possible implementations of the twelfth, thirteenth, fourteenth, and fifteenth aspects.

According to an eleventh aspect, this application provides a computer-readable storage medium, including program instructions. When the program instructions are run on a processor, the processor is caused to perform the method according to any one of the first aspect and the possible implementations of the first aspect, the processor is caused to perform the method according to any one of the second aspect and the possible implementations of the second aspect, the processor is caused to perform the method according to any one of the third aspect and the possible implementations of the third aspect; the processor is caused to perform the method according to any one of the fourth aspect and the possible implementations of the fourth aspect, or the processor is caused to perform the following method according to any one of twelfth, thirteenth, fourteenth, and fifteenth aspects and possible implementations of the twelfth, thirteenth, fourteenth, and fifteenth aspects.

According to a twelfth aspect, this application provides a method for establishing a connection between a client and a network file system NFS. The NFS includes a request access node and a plurality of other nodes, and the plurality of other nodes include at least a first node; and the method includes:
the request access node receives a first connection management CM request sent by the client, where the first CM request is used to establish a connection between the client and the first node; and
the request access node sends first pre-configuration information to a network device, so that the network device enables, based on the pre-configuration information, the client to send a write request or a read request to the first node.

According to the twelfth aspect, in a possible implementation, the NFS further includes a second node, and the method further includes:
the request access node receives a second connection management CM request sent by the client, where the second CM request is used to establish a connection between the client and the second node; and
the request access node sends second pre-configuration information to the network device, so that the network device enables, based on the pre-configuration information, the client to send a write request or a read request to the second node.

According to the twelfth aspect, in a possible implementation, that the CM request is used to establish the connection between the client and the first node includes:

The request access node sends the first CM request to the first node, and establishes a connection to the first node based on the first CM request;
the request access node sends a CM reply to the client; and
the request access node receives an acknowledgment returned by the client for the CM reply.

According to the twelfth aspect, in a possible implementation, the first pre-configuration information includes first information, second information, and a first mapping relationship between the first information and the second information, where the first information includes an address of the request access node, the second information includes an address of the first node, and the first mapping relationship indicates to trigger, when the network device receives a read request or a write request sent by the client, and a destination address of the read request or the write request is the first information, the network device to copy and forward the read request or the write request to the node indicated by the second information.

According to the twelfth aspect, in a possible implementation, a queue pair QP0 is set on the client, a queue pair QP1 and a queue pair QP2 are set on the request access node, and a queue pair QP3 is set on the first node; and
that the request access node receives the connection management CM request sent by the client, where the CM request is used to establish the connection between the client and the first storage node includes:
the QP1 on the request access node receives the connection management CM request sent by the QP0 on the client;
the QP2 on the request access node sends the CM request to the QP3 on the first node, and establishes the connection to the QP3 on the first node based on the CM request;
the QP1 on the request access node sends the CM reply to the QP0 on the client; and
the QP1 on the request access node receives the acknowledgment returned by the QP0 on the client for the CM reply.

According to the twelfth aspect, in a possible implementation, a queue pair QP4 is further set on the client, and a queue pair QP5 is further set on the request access node; and the method further includes:
the QP5 on the request access node establishes a connection to the QP4 on the client.

According to the twelfth aspect, in a possible implementation, a port port0 is set on the client, a port port1 and a port port2 are set on the request access node, and a port port3 is set on the first node;
that the request access node receives the connection management CM request sent by the client, where the CM request is used to establish the connection between the client and the first node includes:
the port1 on the request access node receives the connection management CM request sent by the port0 on the client;
the port2 on the request access node sends the CM request to the port3 on the first node, and establishes the connection to the port3 on the first node based on the CM request;
the port1 on the request access node sends the CM reply to the port0 on the client; and
the port1 on the request access node receives the acknowledgment returned by the port0 on the client for the CM reply.

According to the twelfth aspect, in a possible implementation, a port port4 is further set on the client, and a port port5 is further set on the request access node; and the method further includes:

The port5 on the request access node establishes a connection to the port4 on the client.

According to the twelfth aspect, in a possible implementation, the request access node is configured to establish the connection between the first node and the client according to a remote direct memory access RDMA protocol or a transmission control protocol TCP.

According to a thirteenth aspect, this application provides a method for establishing a connection between a client and a network file system NFS. The method includes:

A network device receives first pre-configuration information sent by a request access node, so that the network device enables, based on the first pre-configuration information, the client to send a write request or a read request to the first node.

According to the thirteenth aspect, in a possible implementation, the first pre-configuration information includes first information, second information, and a first mapping relationship between the first information and the second information, where the first information includes an address of the request access node, the second information includes an address of the first node, and the first mapping relationship indicates to trigger, when the network device receives a read request or a write request sent by the client, and a destination address of the read request or the write request is the first information, the network device to copy and forward the read request or the write request to the node indicated by the second information.

According to a fourteenth aspect, this application provides a method for accessing a network file system NFS by a client. The NFS system includes a request access node and a first node; and the method includes:
a first node receives, based on a connection established between the first node and the client, an NFS request sent by the client;
the first node determines a home node corresponding to the NFS request; and
the first node sends the NFS request to the corresponding home node, so that the corresponding home node handles the NFS request.

According to the fourteenth aspect, in a possible implementation, when the NFS request is a read request, the method further includes: The first node receives a file corresponding to the NFS request sent by the corresponding home node, and sends the file corresponding to the NFS request to the client.

According to the fourteenth aspect, in a possible implementation, the NFS system further includes a second node, and the method further includes:
the second node receives, based on a connection established between the second node and the client, the NFS request sent by the client;
the second node determines the home node corresponding to the NFS request; and
the second node sends the NFS request to the corresponding home node, so that the corresponding home node handles the NFS request.

According to a fifteenth aspect, this application provides a method for accessing a network file system NFS by a client. The NFS includes a request access node and a first node, and the method includes:
a network device receives an NFS request sent by the client; and
the network device sends, to the first node based on first pre-configuration information, the NFS request sent by the client.

According to the fifteenth aspect, in a possible implementation, before that the network device sends, to the first node based on the first pre-configuration information, the NFS request sent by the client, the method further includes:
the network device receives the first pre-configuration information sent by the request access node, where the first pre-configuration information includes first information, second information, and a first mapping relationship between the first information and the second information, where the first information includes an address of the request access node, the second information includes an address of the first node, and the first mapping relationship indicates to trigger, when the network device receives a read request or a write request sent by the client, and a destination address of the read request or the write request is the first information, the network device to copy and forward the read request or the write request to the storage node indicated by the second information.

According to the fifteenth aspect, in a possible implementation, that the network device sends, to the first node based on the first pre-configuration information, the NFS request sent by the client includes:
the network device receives the NFS request sent by the client;
determines that a destination address of the NFS request is the address of the request access node; and
in response to determining that the destination address of the NFS request is the address of the request access node, copies and forwards the NFS request to the first node.

According to a sixteenth aspect, this application provides a node. The node may be configured as a request access node in a network file system NFS, and includes:
a receiving module, configured to receive a first connection management CM request sent by a client, where the first CM request is used to establish a connection between the client and the first node; and
a sending module, configured to send first pre-configuration information to a network device, so that the network device enables, based on the pre-configuration information, the client to send a write request or a read request to the first node.

According to the sixteenth aspect, in a possible implementation,
the receiving module is configured to receive a second connection management CM request sent by the client, where the second CM request is used to establish a connection between the client and the second node; and
the sending module is configured to send second pre-configuration information to the network device, so that the network device enables, based on the pre-configuration information, the client to send a write request or a read request to the second node.

According to the sixteenth aspect, in a possible implementation,
the sending module is further configured to: send the first CM request to the first node, and establish a connection to the first node based on the first CM request;
the sending module is further configured to send a CM reply to the client; and
the receiving module is further configured to receive an acknowledgment returned by the client for the CM reply.

According to the sixteenth aspect, in a possible implementation, the first pre-configuration information includes first information, second information, and a first mapping relationship between the first information and the second information, where the first information includes an address of the request access node, the second information includes an address of the first node, and the first mapping relationship indicates to trigger, when the network device receives a read request or a write request sent by the client, and a destination address of the read request or the write request is the first information, the network device to copy and forward the read request or the write request to the node indicated by the second information.

According to the sixteenth aspect, in a possible implementation, a queue pair QP0 is set on the client, a queue pair QP1 and a queue pair QP2 are set on the request access node, and a queue pair QP3 is set on the first node; and
the receiving module is used by the QP1 on the request access node to receive the connection management CM request sent by the QP0 on the client;
the sending module is used by the QP2 on the request access node to send the CM request to the QP3 on the first node;
the receiving module and the sending module are cooperatively configured to establish the connection to the QP3 on the first node based on the CM request;
the sending module is used by the QP1 on the request access node to send the CM reply to the QP0 on the client; and
the receiving module is used by the QP1 on the request access node to receive the acknowledgment returned by the QP0 on the client for the CM reply.

According to the sixteenth aspect, in a possible implementation, a queue pair QP4 is further set on the client, and a queue pair QP5 is further set on the request access node; and the receiving module and the sending module are cooperatively used by the QP5 on the request access node to establish a connection to the QP4 on the client.

According to the sixteenth aspect, in a possible implementation, a port port0 is set on the client, a port port1 and a port port2 are set on the request access node, and a port port3 is set on the first node; and
the receiving module is used by the port1 on the request access node to receive the connection management CM request sent by the port0 on the client;
the sending module is used by the port2 on the request access node to send the CM request to the port3 on the first node;
the receiving module and the sending module are cooperatively configured to establish the connection to the port3 on the first node based on the CM request;
the sending module is used by the port1 on the request access node to send the CM reply to the port0 on the client; and
the receiving module is used by the port1 on the request access node to receive the acknowledgment returned by the port0 on the client for the CM reply.

According to the sixteenth aspect, in a possible implementation, a port port4 is further set on the client, and a port port5 is further set on the request access node; and the receiving module and the sending module are cooperatively used by the port5 on the request access node to establish a connection to the port4 on the client.

According to the sixteenth aspect, in a possible implementation, the receiving module and the sending module are cooperatively configured to establish the connection between the first node and the client according to a remote direct memory access RDMA protocol or a transmission control protocol TCP.

The functional modules in the sixteenth aspect are configured to implement the method according to the twelfth aspect and the possible implementations of the twelfth aspect.

According to a seventeenth aspect, this application provides a network device, including:
a receiving module, configured to receive first pre-configuration information sent by a request access node, to cause the network device to enable, based on first pre-configuration information, a client to send a write request or a read request to a first node.

Based on the seventeenth aspect, in a possible implementation, the first pre-configuration information includes first information, second information, and a first mapping relationship between the first information and the second information, where the first information includes an address of the request access node, the second information includes an address of the first node, and the first mapping relationship indicates to trigger, when the network device receives a read request or a write request sent by the client, and a destination address of the read request or the write request is the first information, the network device to copy and forward the read request or the write request to the node indicated by the second information.

Based on the seventeenth aspect, in a possible implementation, the receiving module is further configured to receive an NFS request sent by the client; and a sending module is further configured to send, to the first node based on the first pre-configuration information, the NFS request sent by the client.

According to the seventeenth aspect, in a possible implementation,
the receiving module is further configured to receive the NFS request sent by the client;
the determining module is further configured to determine that a destination address of the NFS request is the address of the request access node; and
the sending module is further configured to: in response to determining that the destination address of the NFS request is the address of the request access node, copy and forward the NFS request to the first node.

The functional modules in the seventeenth aspect are configured to implement the method according to the thirteenth aspect and the possible implementations of the thirteenth aspect, or are configured to implement the method according to the fifteenth aspect and the possible implementations of the fifteenth aspect.

According to an eighteenth aspect, this application provides a network file system NFS, where the NFS system includes a first node, and the first node includes:
a receiving module, configured to receive, based on a connection established between the first node and a client, an NFS request sent by the client;
a determining module, configured to determine a home node corresponding to the NFS request; and
a sending module, configured to send the NFS request to the corresponding home node, so that the corresponding home node handles the NFS request.

Based on the eighteenth aspect, in a possible implementation, when the NFS request is a read request, the receiving module is further configured to receive a file that corresponds to the NFS request and that is sent by the corresponding home node; and
the sending module is further configured to send the file corresponding to the NFS request to the client.

The functional modules in the eighteenth aspect are configured to implement the method according to the fourteenth aspect and the possible implementations of the fourteenth aspect.

### BRIEF DESCRIPTION OF DRAWINGS

FIG. 1 is a diagram of a system architecture according to this application;
FIG. 2 is a schematic flowchart of establishing a connection between a client and a cloud NFS according to this application;
FIG. 3 is a diagram of a scenario according to this application;
FIG. 4 is a diagram of another scenario according to this application;
FIG. 5 is a schematic flowchart of a method for accessing a cloud NFS by a client according to this application;
FIG. 6 is a diagram of a scenario according to this application;
FIG. 7 is a diagram of a partial procedure of a method for accessing a cloud NFS by a client according to this application;
FIG. 8 is a schematic flowchart of another method for accessing a cloud NFS by a client according to this application;
FIG. 9 is a diagram of a scenario according to this application;
FIG. 10 is a diagram of a structure of a node according to this application;
FIG. 11 is a diagram of a structure of a network device according to this application; and
FIG. 12 is a diagram of a structure of a hardware device according to this application.

### DESCRIPTION OF EMBODIMENTS

The following clearly and completely describes technical solutions in embodiments of this application with reference to accompanying drawings in embodiments of this application.

For ease of understanding, before a system architecture and method embodiments of this application are described, technical terms in this application are first described.

A network file system NFS request refers to an access request sent by a client to a cloud NFS. The access request includes a read request, a write request, and other requests.

A home node refers to a storage node corresponding to a file accessed by using the NFS request. For example, if the NFS request is a write request and is intended to write a file into a storage node 1, the home node of the NFS request is the storage node 1. For another example, if the NFS request is a read request and is intended to read a file from a storage node 2, the home node of the NFS request is the storage node 2.

A request access node is a node, in a storage cluster, that is configured to receive an NFS request sent by a client. The request access node may also be referred to as a proxy node, and is configured to receive, as a proxy of the storage cluster, the NFS request sent by the client.

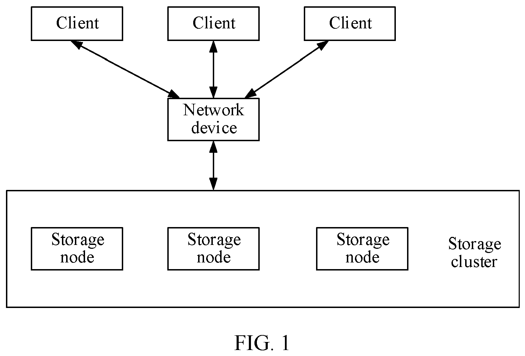

This application provides a system. FIG. 1 is a schematic architectural diagram of a system according to this application. The system includes at least one client, a network device, and a cloud storage cluster.

The client may be an electronic device such as a mobile phone terminal, a desktop computer, a notebook computer, or a physical server of a user.

A network file system NFS is disposed in the storage cluster, the storage cluster includes a plurality of storage nodes, and the plurality of storage nodes store files. The storage cluster may be located in a public cloud, or may be located in a private cloud, or may be located in a hybrid cloud.

In an example, the storage node may include a controller and a hard disk. The controller and the hard disk are located on different physical devices. The controller is configured to handle control instructions. For example, the controller is configured to handle read requests and write requests, and the hard disk is configured to store files. When the storage node needs to write a file, the controller controls the file to be written into the hard disk. When a file needs to be read, the controller controls the file to be read from the hard disk. Alternatively, the hard disk may be another storage device having a persistent storage medium. This is not limited in this application. In an example, the storage node may be a physical server, and the physical server includes a controller and a hard disk, that is, the controller and the hard disk are located on a same physical device. The storage node may alternatively be in another form. For example, the storage node includes a virtual machine deployed on a physical server, and the virtual machine handles control instructions to read a file from a hard disk or write a file into the hard disk. The hard disk may be located on the physical server on which the virtual machine is located, or may be located on another physical server.

The network device may be a switch, a router, or the like. The network device is configured to: receive a request sent by the client, where the request may be a connection management (connection management, CM) request and the CM request is used to request to establish a connection, or the request may be an NFS request and the NFS request includes a read request and a write request; and send the received request to the storage cluster. The network device is further configured to: receive a request, a file, data, or the like sent by the storage cluster, and send the received request, file, or data to the client.

In a scenario, the client, the network device, and the storage cluster may be located in a same data center, or may be located in a plurality of interconnected data centers. When the client, the network device, and the storage cluster are located in the plurality of interconnected data centers, any one or more of the client, the network device, and the plurality of storage nodes in the storage cluster may be located in a same data center.

In another scenario, the network file system NFS in the storage cluster is a cloud service leased or purchased by a user, the client may be a server on which the user is located, and the user accesses the network file system NFS in the cloud storage cluster on the client through the network device.

Based on the foregoing system, an embodiment of this application provides a method for establishing a connection between a client and a cloud NFS. In this application, a connection is established between the client and each storage node in a cloud storage cluster, that is, the client is fully connected to the storage cluster. An example in which the client establishes a connection to one storage node in the storage cluster is used below for description.

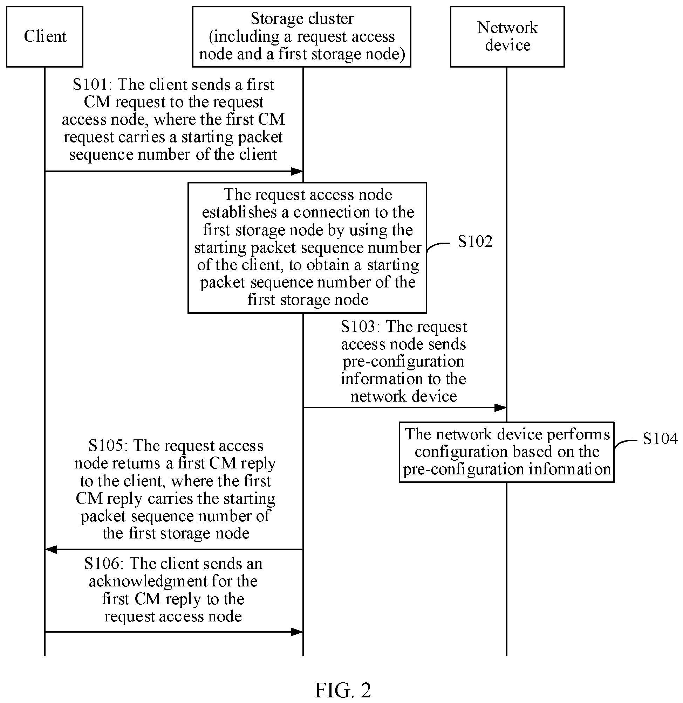

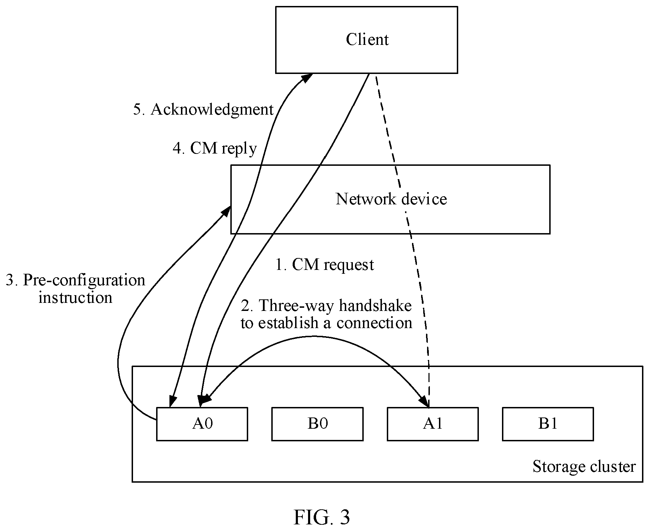

FIG. 2 is a schematic flowchart of establishing a connection between a client and a cloud NFS according to an embodiment of this application. FIG. 3 is a diagram of a scenario according to an embodiment of this application. In the diagram of the scenario in FIG. 3, a storage cluster includes a node A0, a node B0, a node A1, and a node B1. The following describes, with reference to FIG. 3, a method for establishing the connection between the client and the cloud NFS according to this embodiment of this application. The method includes but is not limited to the following descriptions.

S101: The client sends a first CM request to a request access node, where the first CM request carries a starting packet sequence number of the client.

The request access node is a node, in the storage cluster, that is configured to receive a request sent by the client. The request access node may also be referred to as a proxy node, and is configured to receive, as a proxy of the storage cluster, the request sent by the client. It may be understood that any storage node in the storage cluster may be set as the request access node. For example, in the diagram shown in FIG. 3, the node A0 may be set as the request access node.

The client sends the first CM request to the request access node, where the first CM request is used to request to establish a connection. The first CM request carries the starting (starting) packet sequence number of the client, and the starting packet sequence number indicates a sequence number of the 1^{st} packet sent by the client after the connection is established. Correspondingly, the request access node receives the first CM request sent by the client, and obtains the starting packet sequence number of the client. Optionally, the client sends the first CM request to the request access node through the network device.

S102: The request access node establishes a connection to a first storage node by using the starting packet sequence number of the client, to obtain a starting packet sequence number of the first storage node.

The first storage node is any node in the storage cluster other than the request access node.

That the request access node establishes the connection to the first storage node by using the starting packet sequence number of the client, to obtain the starting packet sequence number of the first storage node specifically includes: The request access node sends the first CM request to the first storage node, where the first CM request carries the starting packet sequence number of the client (or it may be understood that the first CM request carries a starting packet sequence number of the request access node, but the starting packet sequence number of the request access node is the starting packet sequence number of the client); and the first storage node receives the first CM request, and obtains the starting packet sequence number of the client (first handshake). The first storage node returns a first CM reply to the request access node, where the first CM reply carries the starting packet sequence number of the first storage node, and the packet sequence number of the first storage node indicates a sequence number of the 1^{st} packet sent by the first storage node after the connection is established; and the request access node receives the first CM reply from the first storage node, and obtains the starting packet sequence number of the first storage node (second handshake). Then, the request access node sends an acknowledgment for the first CM reply to the first storage node, to notify the first storage node that reception of the first CM reply is acknowledged (third handshake). Therefore, through the foregoing three-way handshake, a reliable connection (reliable connection, RC) is established between the request access node and the first storage node, the first storage node obtains the starting packet sequence number of the client, and the request access node obtains the starting packet sequence number of the first storage node.

It may be understood that, in the process in which the connection is established between the client and the request access node (a three-way handshake process), the reliable connection is established between the request access node and the first storage node.

Optionally, a process in which the request access node establishes the connection to the first storage node may alternatively be performed through the network device. For example, the request access node sends the first CM request to the first storage node through the network device, the first storage node returns the first CM reply to the request access node through the network device, and the request access node returns the acknowledgment for the first CM reply to the first storage node through the network device.

For example, in the diagram shown in FIG. 3, if the request access node is A0 and the first storage node is A1, the client sends the first CM request to the node A0, where the first CM request carries the starting packet sequence number of the client. After receiving the first CM request from the client, the node A0 establishes the reliable connection to the node A1 through the three-way handshake. The node A1 obtains the starting packet sequence number of the client, and the node A0 obtains the starting packet sequence number of the node A1. That is, in a process in which the client establishes the connection to the node A0, the node A0 establishes the reliable connection to the node A1. Alternatively, the first storage node may be another node in the storage cluster, for example, may be the node B0 or the node B1.

S103: The request access node sends pre-configuration information to the network device.

S104: The network device performs configuration based on the pre-configuration information.

The request access node sends the pre-configuration information to the network device. The network device receives the pre-configuration information, and performs configuration based on the pre-configuration information. An objective of step S103 and step S104 is to implement communication between the client and the first storage node in a subsequent packet transmission process by configuring the network device, and specifically, implement communication between the client and the first storage node through the network device.

For ease of understanding a meaning of the pre-configuration information and the solution in this embodiment of this application, specific content of the pre-configuration information and related descriptions are described after step S106.

S105: The request access node returns the first CM reply to the client, where the first CM reply carries the starting packet sequence number of the first storage node.

S106: The client sends the acknowledgment for the first CM reply to the request access node.

Step S101 may be understood as the first handshake for establishing the connection between the client and the request access node, and step S105 and step S106 may be understood as the second handshake and the third handshake for establishing the connection between the client and the request access node.

The request access node returns the first CM reply to the client. The first CM reply carries the starting packet sequence number of the first storage node (or may be understood as that the first CM reply carries the starting packet sequence number of the request access node, and the packet sequence number of the request access node is the packet sequence number of the first storage node). The client receives the first CM reply, and obtains the starting packet sequence number of the first storage node (second handshake). Then, the client sends the acknowledgment for the first CM reply to the request access node (third handshake). In this case, a reliable connection is established between the client and the request access node.

It can be learned that, in the process in which the connection is established between the client and the request access node, the connection is established between the request access node and the first storage node. By performing step S101 to step S106, the client obtains the starting packet sequence number of the first storage node, and the first storage node obtains the starting packet sequence number of the client, to prepare for subsequent packet transmission.

The following describes specific content of the pre-configuration information in step S103 and step S104, and a reason for setting the pre-configuration information in this way.

The pre-configuration information includes first information, second information, and a first mapping relationship between the first information and the second information. The first information includes an address of the request access node, the second information includes an address of the first storage node, and the first mapping relationship indicates to trigger, when the network device receives a read request or a write request sent by the client, and a destination address of the read request or the write request is the first information, the network device to copy and forward the read request or the write request to the storage node indicated by the second information. The pre-configuration information further includes third information, fourth information, and a second mapping relationship between the third information and the fourth information. The third information includes the address of the request access node, the fourth information includes an address of the client, and the second mapping relationship indicates to trigger, when the network device receives a packet sent by the first storage node, and a destination address of the packet is the third information, the network device to copy and forward the packet to the device indicated by the fourth information. In this application, "copying and forwarding" includes copying an original request or an original packet, modifying a destination address of a copied request or packet, and sending a copied request or packet with a modified destination address.

Optionally, "copying and forwarding" is merely one implementation, and may alternatively be implemented through "modifying and forwarding". "Modifying and forwarding" means modifying a destination address in an original request or an original packet, and sending the request or the packet with a modified destination address.

The pre-configuration information may exist in a file or instruction form. When the pre-configuration information exists in an instruction form, the pre-configuration information includes: modifying the request access node, to which a packet sent by the client is to be sent, to the first storage node. After the instruction is configured, during subsequent packet transmission, when the network device receives a packet sent by the client to the request access node, the network device executes the configured instruction, to send the packet to the first storage node. That is, the instruction is configured, so that the client communicates with the first storage node through the network device without through the request access node, and a packet or a request does not need to be forwarded by the request access node. The pre-configuration information further includes: modifying the request access node, to which a packet sent by the first storage node is to be sent, to the client. After the instruction is configured, during subsequent packet transmission, when the network device receives a packet sent by the first storage node to the request access node, the network device executes the configured instruction, to send the packet to the client. It should be noted that the client is unaware of a configuration process of the network device. From the perspective of the client, the client considers that the reliable connection is successfully established between the client and the request access node. However, in practice, in the process in which the connection is established between the client and the request access node, the request access node establishes the reliable connection to the first storage node by using the starting packet sequence number of the client. The request access node acts as a trusted "intermediator", and the request access node notifies the first storage node of the starting packet sequence number of the client, and notifies the client of the starting packet sequence number of the first storage node, to prepare for subsequent packet transmission between the client and the first storage node. After the network device is configured, in a subsequent packet transmission process, when the network device receives a packet sent by the client to the request access node, if it is determined that a home node corresponding to the packet is the first storage node, the network device performs the pre-configuration information, to directly send the packet to the first storage node without forwarding the packet through the request access node.

For the first storage node, the first storage node considers that the first storage node establishes the connection to the request access node. However, in practice, the request access node establishes the connection to the client, and also establishes the connection to the first storage node. The request access node acts as a "bridge" to implement communication between the client and the first storage node. During subsequent packet transmission, the first storage node receives an NFS request, and considers that the NFS request is sent by the request access node (actually sent by the client). Therefore, the first storage node sends a response packet of the NFS request to the request access node. When the network device receives the packet sent by the first storage node to the request access node, the network device performs the pre-configuration information, to send the packet to the client.

In this application, the CM request, the CM reply, the acknowledgment, the NFS request, a data transmission packet, and the completion instruction each exist in a packet form, and only types of the packet are different. Some of the packets are request-type packets, some of the packets are data-type packets, and some of the packets are completion-type packets.

It should be noted that the foregoing content only implements a communication connection between the client and the first storage node, and the client may further implement a connection to another storage node (a non-request access node) by using a similar method. For example, in the example in FIG. 3, a communication connection between the client and the node B0 or the node B1 may be further implemented. The node B0 is used as an example: The client sends a second CM request to the node A0, where the second CM request carries the starting packet sequence number of the client. The node A0 establishes an RC connection to the node B0 by using the starting packet sequence number in the second CM request. Therefore, the node B0 obtains the starting packet sequence number of the client, and the node A0 also obtains a starting packet sequence number of the node B0. The node A0 sends pre-configuration information to the network device, where the pre-configuration information includes: When it is determined that a home node corresponding to an NFS request is the node B0, modifying the node A0, to which the NFS request sent by the client is to be sent, to the node B0, and modifying the node A0, to which a packet sent by the node B0 is to be sent, to the client. The node A0 returns a second CM reply to the client, where the second CM reply carries the starting packet sequence number of the node B0, and the client obtains the starting packet sequence number of the node B0. The client returns an acknowledgment for the CM reply to the node A0. In this case, the communication connection between the client and the node B0 is implemented. Similarly, the communication connection between the client and the node B1 may also be implemented. Details are not described herein.

The client may further establish the reliable connection RC to the request access node. For example, in the example in FIG. 3, the reliable connection may be established between the client and the node A0 through the three-way handshake. A specific process is not described again. The client establishes communication connections to the request access node and each storage node, to implement a full connection between the client and the storage cluster.

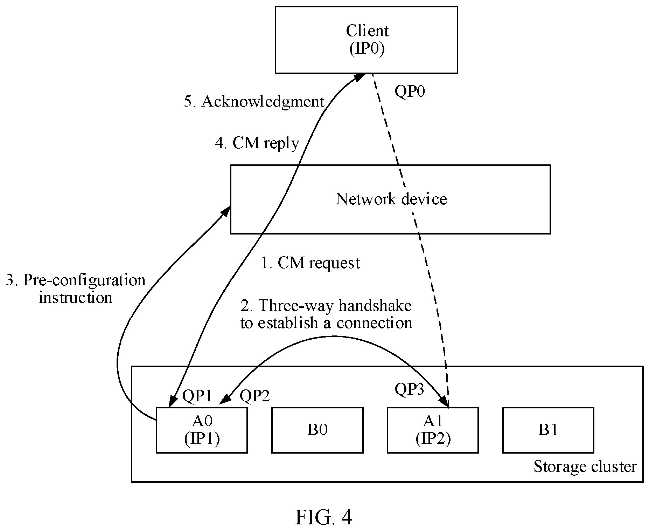

For ease of understanding of the technical solutions in embodiments of this application, the following uses two examples for description. In an implementation, a connection is established between a client and a storage cluster based on a remote direct memory access (remote direct memory access, RDMA) technology. For example, refer to the diagram shown in FIG. 4. The following describes how to establish a communication connection between a client and a first storage node by using a node A0 in FIG. 4 as a request access node and a node A1 as the first storage node.

It is assumed that an address of the client is IP0, an address of the node A0 is IP1, and an address of the node A1 is IP2. The address IP1 of the node A0 is mounted on the client. It is assumed that a queue pair (queue pair, QP) QP0 is set on the client, a queue pair QP1 and a queue pair QP2 are set on the node A0, and a queue pair QP3 is set on the node A1. The QP0 on the client and the QP1 on the node A0 form a flow, and the QP2 on the node A0 and the QP3 on the node A1 form a flow.

A process of establishing the communication connection between the client and the node A1 is as follows:
(1) The client sends a CM request from {IP0, QP0} to the node A0. The CM request carries a starting packet sequence number of the client. The node A0 receives the CM request through the QP1.
(2) The node A0 establishes an RC connection to the QP3 on the node A1 by using the starting packet sequence number of the client through {IP1, QP2}. The node A0 obtains a starting packet sequence number of the node A1, and the node A1 also obtains the starting packet sequence number of the client.
(3) The node A0 sends pre-configuration information to a network device, and the network device performs configuration based on the pre-configuration information. The pre-configuration information includes: modifying a destination address {IP1, QP1} of a packet to a destination address {IP2, QP3}, and modifying a destination address {IP1, QP2} of a packet to a destination address {IP0, QP0}. It can be learned that {IP1, QP1} and {IP0, QP0} form a flow. The packet whose destination address is {IP1, QP1} is a packet sent by the client to the node A0. If the network device determines that a home node of the packet is the node A1, the network device executes an instruction "modify a destination address {IP1, QP1} of a packet to a destination address {IP2, QP3}". In this way, a packet (NFS request) sent by the client can be directly transmitted to the home node A1 without being forwarded by the node A0. {IP2, QP3} and {IP1, QP2} form a flow. The packet whose destination address is {IP1, QP2} is a packet sent by the node A1 to the node A0. When the packet passes through the network device, the network device executes an instruction "modify a destination address {IP1, QP2} of a packet to a destination address {IP0, QP0}". In this way, a packet sent by the first storage node can be directly transmitted to the client without being forwarded by the node A0.
(4) The node A0 sends a CM reply to the client {IP0, QP0} through {IP1, QP1}, where the CM reply carries a starting packet sequence number of the QP3 on the node A1.
(5) The client sends an acknowledgment for the CM reply to the node A0 {IP1, QP1} through {IP0, QP0}. It should be noted that steps (1), (4), and (5) are all implemented on one flow, and therefore are represented by a double-arrow line in FIG. 4.

In this case, a communication connection relationship is established between the client and the node A1.

In the example in FIG. 4, a QP4 (not shown in FIG. 4) is further set on the client, a QP5 (not shown in FIG. 4) is set on the node A0, and the QP4 and the QP5 form a flow. The flow may be used to implement a reliable connection RC between the client and the node A0. For example, the client sends a third CM request to the node A0 {IP1, QP5} through {IP0, QP4}, where the third CM request carries the starting packet sequence number of the client. After receiving the third CM request, the node A0 obtains the starting packet sequence number of the client, and returns a third CM reply to the client through {IP1, QP5}, where the third CM reply carries a starting packet sequence number of the node A0. After receiving the third CM reply, the client obtains the starting packet sequence number of the node A0, and sends, to {IP1, QP5}, an acknowledgment for the third CM reply.

It may be understood that, in FIG. 4, the client may further establish communication connections to a node B0 and a node B1 according to a method similar to that for establishing the communication connection to the node A1. Details are not described herein again. In this way, a full connection between the client and the storage cluster is implemented.

In another implementation, a connection is established between a client and a storage cluster according to a transmission control protocol (transmission control protocol, TCP). In this implementation, a port port is set on each of the client and nodes in the storage cluster. For example, a port0 is set on the client, a queue pair port1 and a queue pair port2 are set on a node A0, and a queue pair port3 is set on a node A1. The port0 of the client and the port1 of the node A0 form a flow, and the port2 of the node A0 and the port3 of the node A1 form a flow. In the foregoing implementation, the client communicates with a storage node through a QP. Different from the foregoing implementation, in this implementation, the client communicates with a storage node through a port port, to implement a full connection between the client and each node in the storage cluster. For brief description of the specification, a specific implementation is not described herein.

This application provides a method for establishing a connection between a client and a cloud NFS. In a process in which the client establishes a communication connection to a first storage node, a request access node acts as a "bridge". In a process in which the client establishes a reliable connection to the request access node, a reliable connection is established between the request access node and the first storage node, and the request access node notifies the first storage node of a starting packet sequence number of the client and notify the client of a starting packet sequence number of the first storage node. Both the first storage node and the client learn of the starting packet sequence number of each other. On this basis, the network device is preconfigured, so that the client can communicate with the first storage node. In this way, the communication connection between the client and the first storage node is successfully established, and a "material" foundation is laid for subsequent packet transmission between the client and the first storage node.

According to a similar method, a communication connection may be established between another storage node in a storage cluster and the client, so that a full connection between the client and each node in the storage cluster is implemented, to lay a "material" foundation for subsequent communication between the client and each node. The full connection is a technical support through which each storage node in the storage cluster can directly send a packet to the client.

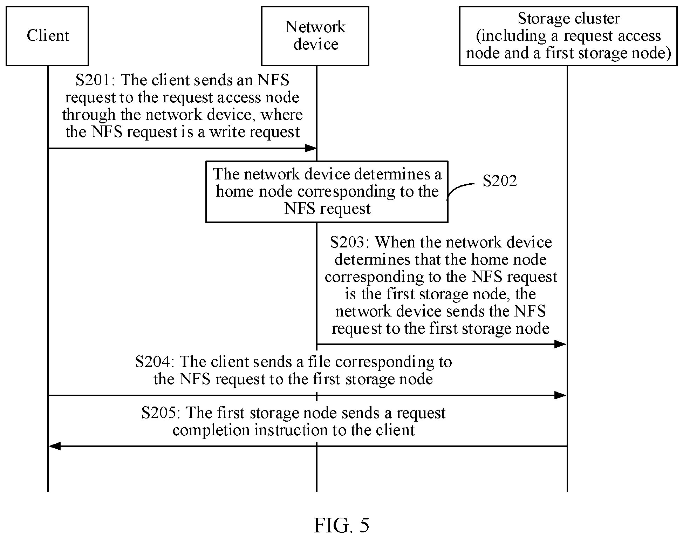

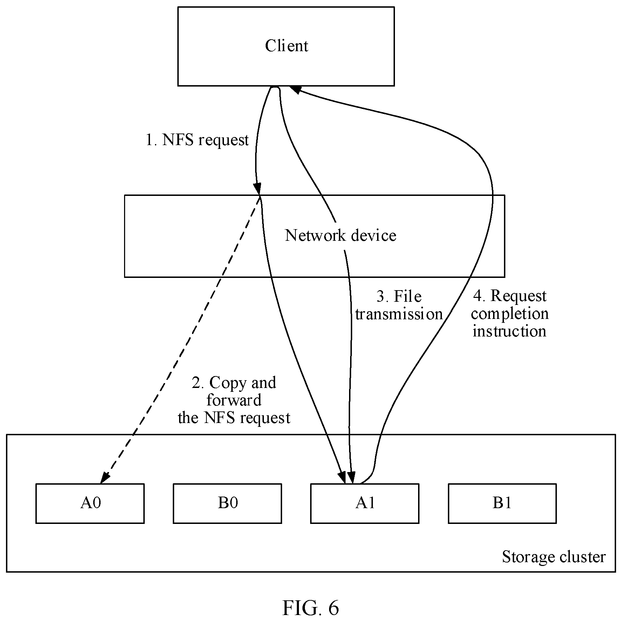

According to the foregoing method embodiment, after the full connection is established between the client and the cloud NFS, this application further provides a method for accessing a cloud NFS by a client. Refer to FIG. 5 and FIG. 6. FIG. 5 is a schematic flowchart of a method for accessing a cloud NFS by a client according to this application. FIG. 6 is a diagram of a scenario according to this application. The following describes, with reference to FIG. 5 and FIG. 6, the method for accessing a cloud NFS by a client according to this application. The method includes but is not limited to the following descriptions.

S201: A client sends an NFS request to a request access node through a network device, where the NFS request is a write request.

For the client, the client considers that a connection is established between the client and the request access node. The client sends the NFS request to the request access node, where the NFS request includes a write request and a read request. In this embodiment, an example in which the NFS request is the write request is used for description. The NFS request carries a field indicating a home node corresponding to the NFS request.

S202: The network device determines the home node corresponding to the NFS request.

The NFS request sent by the client to the request access node passes through the network device. When receiving the NFS request sent by the client to the request access node, the network device determines, based on a file service partition identifier (file service partition ID, fspid for short, which may be understood as home representation information) field carried in the NFS request, the home node corresponding to the NFS request.

Optionally, the network device receives the NFS request sent by the client to the request access node. First, the network device copies the NFS request based on pre-configuration information, modifies a destination address of a copied NFS request, and then sends a copied NFS request whose destination address is modified. Then, the network device determines the home node corresponding to the NFS request, and sends the NFS request to the home node. It may be understood that a storage node where the destination address resides may be the same as or different from the home node corresponding to the NFS request.

When sending the copied NFS request whose destination address is modified, the network device adds an annotation to the NFS request. After receiving the annotated request, the storage node where the destination address resides only backs up the request but does not respond to the request, where the annotation indicates to only back up the NFS request but not to respond to the request.

S203: When the network device determines that the home node corresponding to the NFS request is a first storage node, the network device sends the NFS request to the first storage node.

When the network device determines that the home node corresponding to the NFS request is the first storage node, the network device sends the NFS request to the first storage node.

For example, refer to the diagram shown in FIG. 6. 1 indicates that the network device receives the NFS request sent by the client to the request access node, and 2 indicates that the network device forwards the NFS request to the first storage node, where the first storage node is a node A1, and the request access node is a node A0.

S204: The client sends a file corresponding to the NFS request to the first storage node.

The NFS request is the write request, and the home node corresponding to the NFS request is the first storage node. In other words, the client is to write the file to the first storage node. A communication connection is established between the client and the first storage node. Therefore, the client may send the file corresponding to the NFS request to the first storage node through the network device. After receiving the file, the first storage node writes the file into a persistent medium. For example, refer to the diagram shown in FIG. 6. 3 indicates that the client sends the file corresponding to the NFS request to the first storage node.

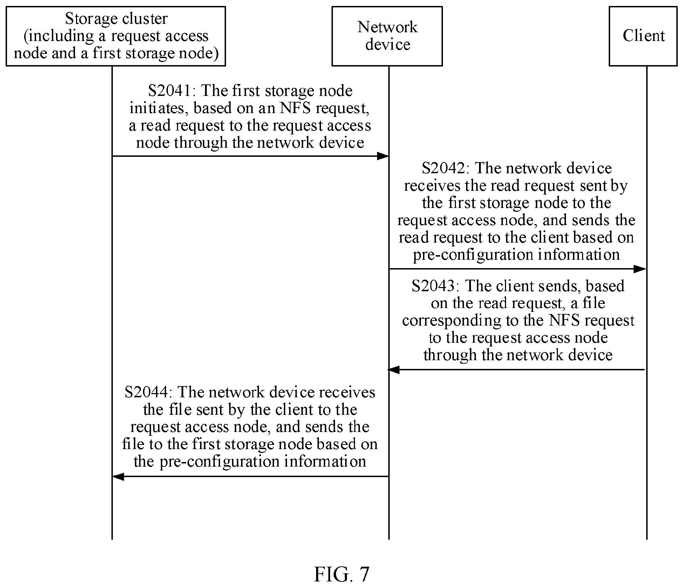

That the client sends the file corresponding to the NFS request to the first storage node may specifically include content of the following step S2041 to step S2044, as shown in FIG. 7.

S2041: The first storage node initiates, based on the NFS request, a read request to the request access node through the network device.

The first storage node receives the NFS request, where the NFS request is the write request, so that the first storage node knows that the file needs to be written into a device of the first storage node. The first storage node considers that a connection is established between the first storage node and the request access node. Therefore, after receiving the NFS request, the first storage node initiates the read request to the request access node, where the read request is used to read/obtain the file corresponding to the NFS request.

S2042: The network device receives the read request sent by the first storage node to the request access node, and sends the read request to the client based on the pre-configuration information.

After receiving the read request sent by the first storage node to the request access node, the network device sends the read request to the client based on the pre-configuration information of the network device. The pre-configuration information is completed when the communication connection is established between the client and the first storage node. The pre-configuration information includes first information, second information, and a first mapping relationship between the first information and the second information, where the first information includes an address of the request access node, the second information includes an address of the first storage node, and the first mapping relationship indicates to trigger, when the network device receives a read request or a write request sent by the client, and a destination address of the read request or the write request is the first information, the network device to copy and forward the read request or the write request to the storage node indicated by the second information.

S2043: The client sends, based on the read request, the file corresponding to the NFS request to the request access node through the network device.

After receiving the read request, the client sends the file corresponding to the NFS request to the request access node through the network device.

S2044: The network device receives the file sent by the client to the request access node, and sends the file to the first storage node based on the pre-configuration information.

The network device receives the file sent by the client to the request access node, and sends the file to the first storage node based on the pre-configuration information of the network device. After receiving the file, the first storage node writes the file into the persistent medium. The pre-configuration information further includes third information, fourth information, and a second mapping relationship between the third information and the fourth information, where the third information includes the address of the request access node, the fourth information includes an address of the client, and the second mapping relationship indicates to trigger, when the network device receives a packet sent by the first storage node, and a destination address of the packet is the third information, the network device to copy and forward the packet to the device indicated by the fourth information. In this application, "copying and forwarding" includes copying an original request or an original packet, modifying a destination address of a copied request or packet, and sending a copied request or packet with a modified destination address.

S205: The first storage node sends a request completion instruction to the client.

After receiving the file, the first storage node sends the request completion instruction to the client through the network device, where the request completion instruction indicates that the NFS request (write request) is completed. For example, in FIG. 6, 4 indicates that the first storage node sends the request completion instruction to the client.

A specific implementation in which the first storage node sends the request completion instruction to the client includes: The first storage node sends the request completion instruction to the request access node through the network device; and the network device receives the request completion instruction sent by the first storage node to the request access node, and sends the request completion instruction to the client based on the pre-configuration information of the network device.

For ease of understanding of the technical solutions, the following uses a specific example to describe how the client accesses the cloud NFS.

For example, in FIG. 4, the client sends an NFS write request to the node A0 {IP1, QP5}. After receiving the NFS write request, the network device determines, based on an fspid field carried in the NFS write request, a home node corresponding to the NFS write request. When determining that the home node is the node A1, the network device copies the NFS write request, and forwards a copied NFS write request to the node A1. The node A1 receives the NFS write request, and sends an RDMA read request to the node A0 {IP1, QP2}. The network device receives the RDMA read request sent by the node A1 to the node A0, and forwards the read request to the client {IP0, QP0} based on the pre-configuration information. The client receives the read request, and sends a file corresponding to the NFS request to the node A0 {IP1, QP1}. After receiving the file sent by the client to the node A0 {IP1, QP1}, the network device forwards the file to the node A1 {IP2, QP3} based on the pre-configuration information. After receiving the file, the node A1 writes the file into a persistent medium, and sends a request completion instruction to the client. Specifically, the node A1 sends the request completion instruction to the node A0 {IP1, QP2} through {IP2, QP3}. The network device receives the request completion instruction sent by the node A1 to the node A0 {IP1, QP2}, and sends the request completion instruction to the client based on the pre-configuration information.

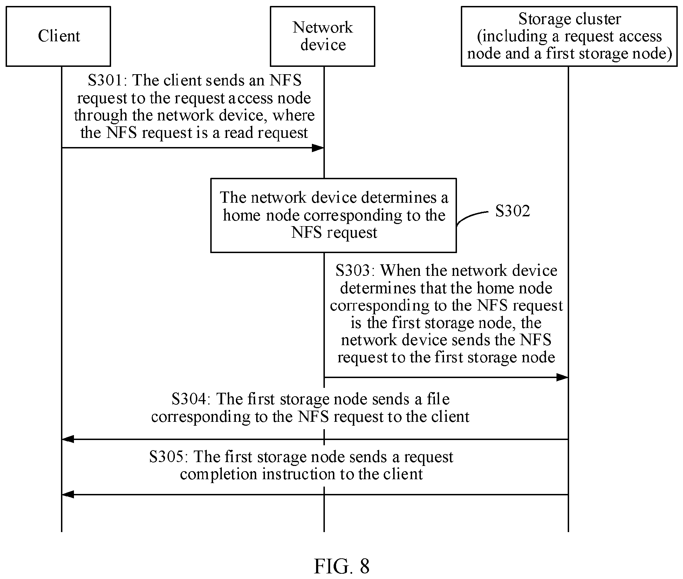

This application further provides a method for accessing a cloud NFS by a client. FIG. 8 is a schematic flowchart of still another method for accessing a cloud NFS by a client according to this application. The method includes but is not limited to the following descriptions.

S301: The client sends an NFS request to a request access node through a network device, where the NFS request is a read request.

S302: The network device determines a home node corresponding to the NFS request.

S303: When the network device determines that the home node corresponding to the NFS request is a first storage node, the network device sends the NFS request to the first storage node.

S304: The first storage node sends a file corresponding to the NFS request to the client.

The NFS request is the read request, that is, the client wants to read the file from the first storage node. After the first storage node receives the NFS request, the first storage node sends the file corresponding to the NFS request to the client.

That the first storage node sends the file corresponding to the NFS request to the client specifically includes: The first storage node sends the file corresponding to the NFS request to the request access node through the network device, and the network device receives the file sent by the first storage node to the request access node, and sends the file to the client based on pre-configuration information.

S305: The first storage node sends a request completion instruction to the client.

In this embodiment, for steps S301, S302, S303, and S305, refer to the descriptions of steps S201, S202, S203, and S205 in the method embodiment in FIG. 5. For brevity of the specification, details are not described herein again. A difference between step S301 and step S201 is that the NFS request in step S301 is a write request, and the NFS request in step S301 in this embodiment is a read request.

It can be learned that, on a basis that a communication connection is established between the client and each node in a storage cluster, the client may send a request to each node in the storage cluster, and each node may also send data (files) to the client. Transmission of the request, the data, the instruction, and the like does not need to be forwarded by another node in the storage cluster. When a single connection is established between the client and the request access node in the storage cluster, forwarding performed by the request access node is required when the client communicates with another storage node in the storage cluster. By comparison, according to the method in this application, internal bandwidth consumption of the storage cluster is reduced, and efficiency of request handling by the storage cluster is improved.

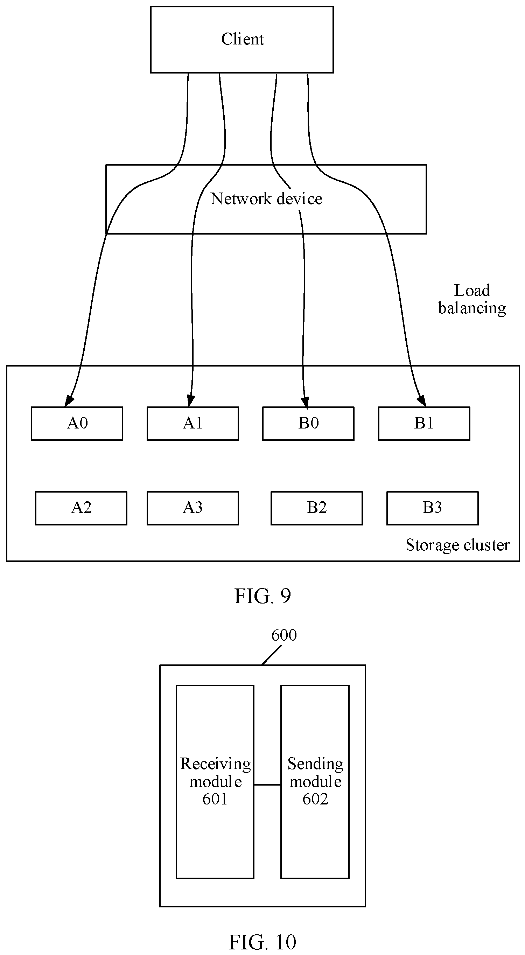

This application further provides a system architecture. As shown in FIG. 9, FIG. 9 is a schematic architectural diagram of another system according to this application. The system includes a client, a network device, and a storage cluster. An NFS system is disposed in the storage cluster. The storage cluster includes a plurality of nodes. For example, in this example, the storage cluster includes a node A0, a node A1, a node A2, a node A3, a node B0, a node B1, a node B2, and a node B3. The plurality of nodes shown herein are merely an example, and do not constitute a limitation on this application.

In the system shown in FIG. 9, the network device does not have a function of determining a home node corresponding to an NFS request. A request access node (a proxy node) in the storage cluster has a function of determining a home node corresponding to an NFS request.

In a conventional method, the client establishes a single connection to the network file system NFS in the storage cluster. For example, if the node A0 is a request access node, the client establishes a single connection to the storage cluster through the node A0. First, a reliable connection is established between the client and the node A0 based on a TCP protocol or an RDMA protocol. Then, the client sends an NFS request to the node A0 through the network device. The NFS request carries a field indicating a home node. The node A0 determines, based on the field indicating the home node carried in the NFS request, the home node corresponding to the NFS request, and sends the NFS request to the corresponding home node.

However, when the node A0 receives a large quantity of NFS requests, the node A0 is in a high-load state. In consideration of load balancing and reducing load pressure of the node A0, this application provides a method. The node A1 in the storage cluster is also set as a request access node (a proxy node), and a connection between the client and the node A1 in this system is established according to the method for establishing a connection between the client and the node A1 described in FIG. 2 and FIG. 3. That is, the node A0 acts as a "bridge", and the connection between the client and the node A1 is established through the node A0. After the connection between the client and the node A1 is established, the node A1 may be configured to receive the NFS request sent by the client. In this case, the node A1 and the node A0 may jointly bear the NFS request sent by the client, to reduce load pressure of the node A0.

Similarly, the node B0 and the node B1 may also be set as request access nodes (proxy nodes). A connection between the client and the node B0 and a connection between the client and the node B1 are established by using the same method. Then, the node B0 and the node B1 may also be configured to receive the NFS request sent by the client. In this way, the node A0, the node A1, the node B0, and the node B1 may all be configured to: handle the NFS request, determine the home node corresponding to the NFS request, and send the NFS request to the corresponding home node.

According to the method described in the system architecture, load balancing can be achieved, the load pressure of the node A0 can be reduced, and efficiency of request handling can be improved.

The foregoing content describes the method embodiments. The following describes apparatus embodiments corresponding to the method embodiments.

FIG. 10 is a diagram of a structure of a node 600 in a storage cluster according to this application. A network file system NFS is deployed in the storage cluster. The node 600 may be configured as the request access node in the foregoing method embodiments, or may be configured as any storage node in the foregoing method embodiments, for example, the first storage node.

When the node 600 is configured as the request access node, the node 600 includes a receiving module 601 and a sending module 602.

The receiving module 601 is configured to receive a connection management CM request sent by a client, where the CM request carries a starting packet sequence number of the client.

The receiving module 601 and the sending module 602 are cooperatively configured to establish a reliable connection RC to a first storage node by using the starting packet sequence number of the client, to obtain a starting packet sequence number of the first storage node.

The sending module 602 is configured to send pre-configuration information to a network device. The network device is configured to implement connections between the client and the request access node and between the client and the first storage node, and the pre-configuration information is used for configuration of the network device.

The sending module 602 is configured to return a CM reply to the client. The CM reply carries the starting packet sequence number of the first storage node.

The receiving module 601 is configured to receive an acknowledgment returned by the client for the CM reply.

In a possible implementation, the pre-configuration information includes first information, second information, and a first mapping relationship between the first information and the second information, where the first information includes an address of the request access node, the second information includes an address of the first storage node, and the first mapping relationship indicates to trigger, when the network device receives a read request or a write request sent by the client, and a destination address of the read request or the write request is the first information, the network device to copy and forward the read request or the write request to the storage node indicated by the second information. The pre-configuration information further includes third information, fourth information, and a second mapping relationship between the third information and the fourth information, where the third information includes the address of the request access node, the fourth information includes an address of the client, and the second mapping relationship indicates to trigger, when the network device receives a packet sent by the first storage node, and a destination address of the packet is the third information, the network device to copy and forward the packet to the device indicated by the fourth information.

In a possible implementation, a queue pair QP0 is set on the client, a queue pair QP1 and a queue pair QP2 are set on the request access node, and a queue pair QP3 is set on the first storage node.

The receiving module 601 is used by the queue pair QP1 to receive the CM request sent by the queue pair QP0 on the client, where the CM request carries the starting packet sequence number of the client.

The receiving module 601 and the sending module 602 are cooperatively used by the queue pair QP2 to establish a reliable connection RC to the queue pair QP3 on the first storage node by using the starting packet sequence number of the client, to obtain the starting packet sequence number of the first storage node.

The sending module 602 is configured to send the pre-configuration information to the network device, so that the network device performs configuration based on the pre-configuration information, to implement communication between the client and the first storage node through the network device. The pre-configuration information includes: modifying the queue pair QP1 on the request access node, to which an NFS request is to be sent, to the queue pair QP3 on the first storage node; and modifying the queue pair QP2 on the request access node, to which a packet is to be sent, to the queue pair QP0 on the client.

The sending module 602 is used by the queue pair QP1 to return the CM reply to the queue pair QP0 on the client. The CM reply carries the starting packet sequence number of the first storage node.

The receiving module 601 is used by the queue pair QP1 to receive the acknowledgment returned by the queue pair QP0 on the client for the CM reply, to establish a communication connection between the client and the first storage node.

In a possible implementation, a queue pair QP4 is further set on the client, and a queue pair QP5 is further set on the request access node. The receiving module 601 and the sending module 602 are cooperatively used by the queue pair QP5 to establish a reliable connection RC to the queue pair QP4 on the client.

In a possible implementation, a port port0 is set on the client, a port port1 and a port port2 are set on the request access node, and a port port3 is set on the first storage node.

The receiving module 601 is used by the port port1 to receive the CM request sent through the port port0 on the client, where the CM request carries the starting packet sequence number of the client.

The receiving module 601 and the sending module 602 are cooperatively used by the port port2 to establish a connection to the port port3 on the first storage node by using the starting packet sequence number of the client, to obtain the starting packet sequence number of the first storage node.

The sending module 602 is configured to send the pre-configuration information to the network device, where the pre-configuration information is used for configuration of the network device.

The sending module 602 is used by the port port1 to return the CM reply to the port port0 on the client. The CM reply carries the starting packet sequence number of the first storage node.

The receiving module 601 is used by the port port1 to receive the acknowledgment returned by the port port0 on the client for the CM reply, to establish a communication connection between the client and the first storage node.

In a possible implementation, a port port4 is further set on the client, and a port port5 is further set on the request access node; and the receiving module 601 and the sending module 602 are cooperatively used by the port port5 to establish a connection to the port port4 on the client.

In a possible implementation, the client establishes connections to the request access node and any one of a plurality of storage nodes according to a remote direct memory access RDMA protocol or a transmission control protocol TCP.

When the node 600 is configured as any storage node in the storage cluster, for example, may be the first storage node, the node 600 includes a receiving module 601 and a sending module 602.

The receiving module 601 is configured to receive an NFS request sent by a client.

The sending module 602 is configured to obtain a file corresponding to the NFS request from the client, or send a file corresponding to the NFS request to the client.

The sending module 602 is further configured to send a request completion instruction to the client.

In a possible implementation, the NFS request is a write request, the sending module 602 is configured to send a read request to the client, where the read request is used to read the file corresponding to the NFS request; and the receiving module 601 is configured to receive the file corresponding to the NFS request sent by the client.

In a possible implementation, the NFS request is a read request, and the sending module 602 is configured to send a write request to the client, where the write request is used to write the file corresponding to the NFS request, and the write request includes the file corresponding to the NFS request.

The foregoing modules are obtained through division based on functions. During actual application, there may be another division manner, or more or fewer modules may be obtained through division. This is not limited in this application.

Each functional module may be configured to implement the methods in the foregoing method embodiments. For details, refer to descriptions of the related content in the foregoing method embodiments. For brevity of the specification, details are not described herein again.

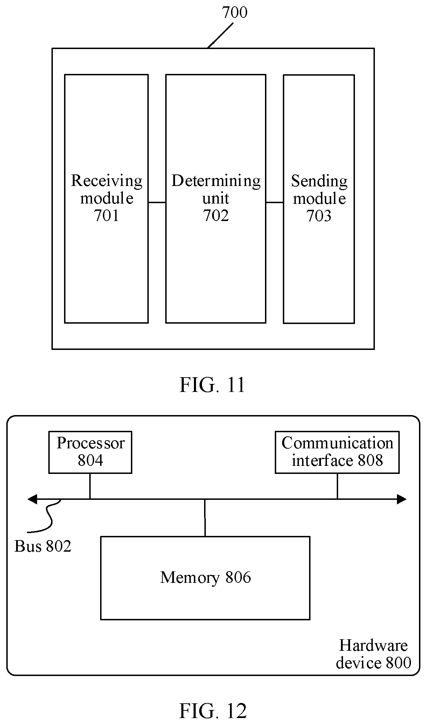

This application further provides a network device 700. FIG. 11 is a diagram of a structure of the network device 700 according to this application. The network device 700 includes:
a receiving module 701, configured to receive a connection management CM request sent by a client; and
a sending module 703, configured to send the CM request to a request access node, where the CM request carries a starting packet sequence number of the client.

The receiving module 701 is further configured to receive pre-configuration information sent by the request access node, where the pre-configuration information is used for configuration of the network device.

The receiving module 701 is further configured to receive a CM reply sent by the request access node. The sending module 703 is further configured to send the CM reply to the client, where the CM reply carries a starting packet sequence number of a first storage node.

The receiving module 701 is further configured to receive an acknowledgment returned by the client for the CM reply. The sending module 703 is further configured to send the acknowledgment to the request access node, to establish a connection between the client and the first storage node.

In a possible implementation, the pre-configuration information includes first information, second information, and a first mapping relationship between the first information and the second information, where the first information includes an address of the request access node, the second information includes an address of the first storage node, and the first mapping relationship indicates to trigger, when the network device receives a read request or a write request sent by the client, and a destination address of the read request or the write request is the first information, the network device to copy and forward the read request or the write request to the storage node indicated by the second information. The pre-configuration information further includes third information, fourth information, and a second mapping relationship between the third information and the fourth information, where the third information includes the address of the request access node, the fourth information includes an address of the client, and the second mapping relationship indicates to trigger, when the network device receives a packet sent by the first storage node, and a destination address of the packet is the third information, the network device to copy and forward the packet to the device indicated by the fourth information.

In a possible implementation, the receiving module 701 is configured to receive an NFS request sent by the client.

The determining module 702 is configured to determine a home node corresponding to the NFS request.

The sending module 703 is configured to send, in response to determining that the home node corresponding to the NFS request is the first storage node, the NFS request to the first storage node.

The sending module 703 is further configured to: send, to the first storage node based on the pre-configuration information, a file corresponding to an NFS request sent by the client; or send, to the client based on the pre-configuration information, a file corresponding to an NFS request sent by the first storage node.

The sending module 703 is further configured to send, to the client based on the pre-configuration information, a request completion instruction sent by the first storage node.

In a possible implementation, the NFS request is a write request, and the sending module 703 is configured to send, to the client based on the pre-configuration information, a read request sent by the first storage node, where the read request is used to read the file corresponding to the NFS request; and the sending module 703 is configured to send, to the first storage node based on the pre-configuration information, the file corresponding to the NFS request sent by the client.

In a possible implementation, the NFS request is a read request, and the sending module 703 is configured to send, to the client based on the pre-configuration information, a write request sent by the first storage node, where the write request is used to write the file corresponding to the NFS request, and the write request includes the file corresponding to the NFS request.

The modules in FIG. 11 are obtained through division based on functions. During actual application, there may be another division manner, or more or fewer modules may be obtained through division. This is not limited in this application.

Each functional module may be configured to implement an operation performed by the network device in the foregoing method embodiments. For details, refer to descriptions of related content in the foregoing method embodiments. For brevity of the specification, details are not described herein again.

FIG. 12 is a diagram of a structure of a hardware device 800 according to this application. The hardware device 800 may be configured as any node in the storage cluster in the foregoing method embodiments, for example, the request access node or the first storage node, or may be configured as the network device in the foregoing method embodiments.

The hardware device 800 includes a bus 802, a processor 804, a memory 806, and a communication interface 808. The processor 804, the memory 806, and the communication interface 808 communicate with each other through the bus 802. It should be understood that a quantity of processors and a quantity of memories in the hardware device 800 are not limited in this application.

The bus 802 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by only one line in FIG. 12. However, it does not indicate that there is only one bus or only one type of bus. The bus 802 may include a path for information transmission between the components (for example, the memory 806, the processor 804, and the communication interface 808) of the hardware device 800.

The processor 804 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 806 may include a volatile memory (volatile memory), for example, a random access memory (random access memory, RAM). The processor 804 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 806 stores executable program code.

When the hardware device 800 is configured as any node in the storage cluster, for example, configured as the request access node or the first storage node, the processor 804 executes the executable program code in the memory 806 to separately implement functions of the receiving module 601 and the sending module 602, to implement all or some of the methods for accessing a cloud network file system NFS by a client and all or some of the methods for establishing a connection to a cloud network file system NFS by a client. To be specific, the memory 806 stores all or some instructions used to perform the method for accessing a cloud network file system NFS by a client, and all or some instructions used to perform the method for establishing a connection to a cloud network file system NFS by a client.

When the hardware device 800 is configured as the network device, the processor 804 executes the executable program code in the memory 806 to separately implement functions of the receiving module 701, the determining module 702, and the sending module 703, to implement all or some of the methods for accessing a cloud network file system NFS by a client and all or some of the methods for establishing a connection to a cloud network file system NFS by a client. To be specific, the memory 806 stores all or some instructions used to perform the method for accessing a cloud network file system NFS by a client, and all or some instructions used to perform the method for establishing a connection to a cloud network file system NFS by a client.

The communication interface 808 implements communication between the hardware device 800 and another device or a communication network by using a transceiver module, for example, but not limited to a network interface card or a transceiver.

In some possible embodiments, the network device may be implemented as a virtualized device.

For example, the virtualized device may be a virtual machine (virtual machine, VM) that runs a program having a packet sending function. The virtual machine is deployed on a hardware device. For example, the hardware device may be a physical server, or the hardware device may be a cloud storage device. The virtual machine is a complete computer system, obtained through software simulation, that runs in an entirely isolated environment and has complete hardware system functions. The virtual machine may be configured as a network device. For example, the network device may be implemented based on a general-purpose physical server based on a network functions virtualization (network functions virtualization, NFV) technology. The network device is a virtual host, a virtual router, or a virtual switch. By reading this application, a person skilled in the art may obtain, on the general-purpose physical server through virtualization based on the NFV technology, the network device having the foregoing functions. Details are not described herein.

The virtualized device may be a container, and the container is an entity configured to provide an isolated virtualized environment. For example, the container may be a docker container, and the container may be configured as a network device. For example, the network device may be created by using a corresponding image. For example, a container proxy-container instance may be created for a proxy-container by using an image of a container proxy-container that provides a proxy service, and the container instance proxy-container is provided as the network device. When a container technology is used for implementation, the network device may run by using a kernel of a physical machine, and a plurality of network devices may share an operating system of the physical machine. Different network devices may be isolated by using the container technology. A containerized network device may run in a virtualized environment, for example, may run in a virtual machine, or a containerized network device may directly run in a physical machine.

For example, the virtualized device may be a Pod. The Pod is a basic unit of Kubernetes (where Kubernetes is an open-source container orchestration engine of Google, and is referred to as K8s for short) for deploying, managing, and orchestrating a containerized application. The Pod may include one or more containers. All containers in a same Pod are usually deployed on a same host. Therefore, all the containers in the same Pod may communicate with each other through the host, and may share storage resources and network resources of the host. The Pod may be configured as a network device. For example, specifically, a container as a service (container as a service, CaaS, a container-based PaaS service) may be instructed to create the Pod, and the Pod is provided as the network device. Certainly, the network device may alternatively be another virtualized device. Examples are not listed herein one by one.

An embodiment of this application further provides a system, including a client, a network device, and a cloud network file system NFS. The NFS includes a request access node and a plurality of storage nodes. The plurality of storage nodes include a first storage node. The plurality of storage nodes store files. The request access node is an ingress node through which a client sends a request to the NFS through the network device. The first storage node, the request access node, and the network device are configured to implement all or some of the methods described in the foregoing method embodiments.

An embodiment of this application further provides a computer program product including instructions. The computer program product may be software or a program product that includes the instructions and that can run on a processor or be stored in any usable medium. When the computer program product runs on the processor, the processor is enabled to perform all or some of the methods in the foregoing method embodiments.

An embodiment of this application further provides a computer-readable storage medium. The computer-readable storage medium may be any usable medium accessible by a compute device, or a data storage device, for example, a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct a processor to perform the methods in the foregoing method embodiments.

The foregoing embodiments are merely intended for describing the technical solutions of the present invention other than limiting the present invention. Although the present invention is described in detail with reference to the foregoing embodiments, a person of ordinary skill in the art should understand that modifications may still be made to the technical solutions described in the foregoing embodiments or equivalent replacements may still be made to some technical features thereof, without departing from the protection scope of the technical solutions of embodiments of the present invention.

## Claims

1. A method for accessing a network file system NFS by a client, wherein the NFS comprises a request access node and a plurality of storage nodes, the plurality of storage nodes comprise a first storage node, and the plurality of storage nodes store files; and the method comprises:
receiving, by the first storage node based on a connection established between the first storage node and the client, an NFS request sent by the client; and
obtaining, by the first storage node based on the connection, a file corresponding to the NFS request from the client; or sending, by the first storage node based on the connection, a file corresponding to the NFS request to the client.

2. The method according to claim 1, wherein the NFS request is a write request, and
obtaining, by the first storage node based on the connection, the file corresponding to the NFS request from the client comprises:
sending, by the first storage node, a read request to the client based on the connection, wherein the read request is used to read the file corresponding to the NFS request; and
receiving, by the first storage node based on the connection, the file corresponding to the NFS request sent by the client.

3. The method according to claim 1, wherein the NFS request is a read request, and
sending, by the first storage node based on the connection, the file corresponding to the NFS request to the client comprises:
sending, by the first storage node, a write request to the client based on the connection, wherein the write request is used to write the file corresponding to the NFS request, and the write request comprises the file corresponding to the NFS request.

4. The method according to any one of claims 1 to 3, wherein before receiving, by the first storage node based on the connection established between the first storage node and the client, the NFS request sent by the client, the method further comprises:
establishing, by the first storage node, the connection to the client through the request access node.

5. The method according to claim 4, wherein establishing, by the first storage node, the connection to the client through the request access node comprises:
receiving, by the first storage node, a connection management CM request sent by the request access node, wherein the CM request is a request sent by the client to the request access node; and
establishing, by the first storage node, the connection to the request access node based on the CM request, so that the request access node returns a CM reply to the client.

6. The method according to claim 5, wherein a queue pair QP0 is set on the client, a queue pair QP1 and a queue pair QP2 are set on the request access node, and a queue pair QP3 is set on the first storage node; and
the method comprises:
receiving, by the QP3 on the first storage node, the connection management CM request sent by the QP2 on the request access node, wherein the CM request is a request sent by the QP0 on the client to the QP1 on the request access node; and
establishing, by the QP3 on the first storage node, the connection to the QP2 on the request access node based on the CM request, so that the QP1 on the request access node returns the CM reply to the QP0 on the client.

7. The method according to any one of claims 4 to 6, wherein the first storage node establishes the connection to the client through the request access node according to a remote direct memory access RDMA protocol.

8. A method for accessing a network file system NFS by a client, wherein the method is applied to a network device, the network device is configured for communication between the client and the NFS, the NFS comprises a request access node and a plurality of storage nodes, the plurality of storage nodes store files, and the plurality of storage nodes comprise a first storage node; and the method comprises:
receiving, by the network device, an NFS request sent by the client;
in response to determining that a home node corresponding to the NFS request is the first storage node, sending, by the network device, the NFS request to the first storage node; and
sending, by the network device to the first storage node based on pre-configuration information, a file corresponding to the NFS request sent by the client; or sending, by the network device to the client based on the pre-configuration information, a file corresponding to the NFS request sent by the first storage node.

9. The method according to claim 8, wherein the NFS request is a write request, and
sending, by the network device to the first storage node based on the pre-configuration information, the file corresponding to the NFS request sent by the client comprises:
sending, by the network device to the client based on the pre-configuration information, a read request sent by the first storage node, wherein the read request is used to read the file corresponding to the NFS request; and
sending, by the network device to the first storage node based on the pre-configuration information, the file corresponding to the NFS request sent by the client.

10. The method according to claim 8, wherein the NFS request is a read request, and
sending, by the network device to the client based on the pre-configuration information, the file corresponding to the NFS request sent by the first storage node comprises:
sending, by the network device to the client based on the pre-configuration information, a write request sent by the first storage node, wherein the write request is used to write the file corresponding to the NFS request, and the write request comprises the file corresponding to the NFS request.

11. The method according to any one of claims 8 to 10, wherein before sending, by the network device to the first storage node based on the pre-configuration information, the file corresponding to the NFS request sent by the client; or before sending, by the network device to the client based on the pre-configuration information, the file corresponding to the NFS request sent by the first storage node, the method further comprises:
receiving, by the network device, the pre-configuration information sent by the request access node, wherein the pre-configuration information comprises first information, second information, and a first mapping relationship between the first information and the second information, wherein the first information comprises an address of the request access node, the second information comprises an address of the first storage node, and the first mapping relationship indicates to trigger, when the network device receives a read request or a write request sent by the client, and a destination address of the read request or the write request is the first information, the network device to copy and forward the read request or the write request to the storage node indicated by the second information; and
the pre-configuration information further comprises third information, fourth information, and a second mapping relationship between the third information and the fourth information, wherein the third information comprises the address of the request access node, the fourth information comprises an address of the client, and the second mapping relationship indicates to trigger, when the network device receives a packet sent by the first storage node, and a destination address of the packet is the third information, the network device to copy and forward the packet to the device indicated by the fourth information.

12. The method according to any one of claims 8 to 11, wherein sending, by the network device to the first storage node based on the pre-configuration information, the file corresponding to the NFS request sent by the client comprises:
receiving, by the network device, the file corresponding to the NFS request sent by the client;
determining that a destination address of the file corresponding to the NFS request is the address of the request access node; and
in response to determining that the destination address of the file corresponding to the NFS request is the address of the request access node, copying and forwarding the file corresponding to the NFS request to the first storage node; or
sending, by the network device to the client based on the pre-configuration information, the file corresponding to the NFS request sent by the first storage node comprises:
receiving, by the network device, the file corresponding to the NFS request sent by the first storage node;
determining that a destination address of the file corresponding to the NFS request is the address of the request access node; and
in response to determining that the destination address of the file corresponding to the NFS request is the address of the request access node, copying and forwarding the file corresponding to the NFS request to the client.

13. A method for establishing a connection between a client and a network file system NFS, wherein the NFS comprises a request access node and a plurality of storage nodes, the plurality of storage nodes comprise a first storage node, and the plurality of storage nodes store files; and the method comprises:
receiving, by the request access node, a connection management CM request sent by the client, wherein the CM request is used to establish a connection between the client and the first storage node; and
sending, by the request access node, pre-configuration information to a network device, so that the network device enables, based on the pre-configuration information, the client to send a write request or a read request to the first storage node, or so that the network device enables, based on the pre-configuration information, the first storage node to send a write request or a read request to the client.

14. The method according to claim 13, wherein that the CM request is used to establish the connection between the client and the first storage node comprises:
sending, by the request access node, the CM request to the first storage node, and establishing the connection to the first storage node based on the CM request;
sending, by the request access node, a CM reply to the client; and
receiving, by the request access node, an acknowledgment returned by the client for the CM reply.

15. The method according to claim 13 or 14, wherein the pre-configuration information comprises first information, second information, and a first mapping relationship between the first information and the second information, wherein the first information comprises an address of the request access node, the second information comprises an address of the first storage node, and the first mapping relationship indicates to trigger, when the network device receives a read request or a write request sent by the client, and a destination address of the read request or the write request is the first information, the network device to copy and forward the read request or the write request to the storage node indicated by the second information; and
the pre-configuration information further comprises third information, fourth information, and a second mapping relationship between the third information and the fourth information, wherein the third information comprises the address of the request access node, the fourth information comprises an address of the client, and the second mapping relationship indicates to trigger, when the network device receives a packet sent by the first storage node, and a destination address of the packet is the third information, the network device to copy and forward the packet to the device indicated by the fourth information.

16. The method according to any one of claims 13 to 15, wherein a queue pair QP0 is set on the client, a queue pair QP1 and a queue pair QP2 are set on the request access node, and a queue pair QP3 is set on the first storage node; and
receiving, by the request access node, the connection management CM request sent by the client, wherein the CM request is used to establish the connection between the client and the first storage node comprises:
receiving, by the QP1 on the request access node, the connection management CM request sent by the QP0 on the client;
sending, by the QP2 on the request access node, the CM request to the QP3 on the first storage node, and establishing the connection to the QP3 on the first storage node based on the CM request;
sending, by the QP1 on the request access node, the CM reply to the QP0 on the client; and
receiving, by the QP1 on the request access node, the acknowledgment returned by the QP0 on the client for the CM reply.

17. The method according to claim 16, wherein a queue pair QP4 is further set on the client, and a queue pair QP5 is further set on the request access node; and the method further comprises:
establishing, by the QP5 on the request access node, a connection to the QP4 on the client.

18. The method according to any one of claims 13 to 15, wherein a port port0 is set on the client, a port port1 and a port port2 are set on the request access node, and a port port3 is set on the first storage node; and
receiving, by the request access node, the connection management CM request sent by the client, wherein the CM request is used to establish the connection between the client and the first storage node comprises:
receiving, by the port1 on the request access node, the connection management CM request sent by the port0 on the client;
sending, by the port 2 on the request access node, the CM request to the port 3 on the first storage node, and establishing the connection to the port 3 on the first storage node based on the CM request;
sending, by the port1 on the request access node, the CM reply to the port0 on the client; and
receiving, by the port1 on the request access node, the acknowledgment returned by the port0 on the client for the CM reply.

19. The method according to claim 18, wherein a port port4 is further set on the client, and a port port5 is further set on the request access node; and the method further comprises:
establishing, by the port5 on the request access node, a connection to the port4 on the client.

20. The method according to any one of claims 13 to 19, wherein the request access node is configured to establish the connection between the first storage node and the client according to a remote direct memory access RDMA protocol or a transmission control protocol TCP.

21. A method for establishing a connection between a client and a network file system NFS, wherein the NFS comprises a request access node and a plurality of storage nodes, the plurality of storage nodes store files, and the plurality of storage nodes comprise a first storage node; and the method comprises:
receiving, by a network device, pre-configuration information sent by the request access node, so that the network device enables, based on the pre-configuration information, the client to send a write request or a read request to the first storage node, or so that the network device enables, based on the pre-configuration information, the first storage node to send a write request or a read request to the client.

22. The method according to claim 21, wherein the pre-configuration information comprises first information, second information, and a first mapping relationship between the first information and the second information, wherein the first information comprises an address of the request access node, the second information comprises an address of the first storage node, and the first mapping relationship indicates to trigger, when the network device receives a read request or a write request sent by the client, and a destination address of the read request or the write request is the first information, the network device to copy and forward the read request or the write request to the storage node indicated by the second information; and
the pre-configuration information further comprises third information, fourth information, and a second mapping relationship between the third information and the fourth information, wherein the third information comprises the address of the request access node, the fourth information comprises an address of the client, and the second mapping relationship indicates to trigger, when the network device receives a packet sent by the first storage node, and a destination address of the packet is the third information, the network device to copy and forward the packet to the device indicated by the fourth information.

23. A network device, comprising a memory and a processor, wherein the memory is configured to store instructions, and the processor is configured to execute the instructions stored in the memory, to implement the method according to any one of claims 8 to 12, or implement the method according to claim 21 or claim 22.

24. A compute device cluster, comprising a request access node and a plurality of storage nodes, wherein any one of the request access node and the plurality of storage nodes comprises a memory and a processor, and the processor is configured to execute instructions stored in the memory, to cause the compute device cluster to perform the method according to any one of claims 1 to 7, or to cause the compute device cluster to perform the method according to any one of claims 13 to 20.

25. A system, comprising a network device and a network file system NFS, wherein the NFS comprises a request access node and a plurality of storage nodes, the plurality of storage nodes comprise a first storage node, the plurality of storage nodes store files, the request access node is configured to receive an NFS request sent by a client, and the system is configured to implement the method according to any one of claims 1 to 7, the system is configured to implement the method according to any one of claims 8 to 12, the system is configured to implement the method according to any one of claims 13 to 20, or the system is configured to implement the method according to claim 21 or claim 22.

26. A computer-readable storage medium, comprising program instructions, wherein when the program instructions are run on a processor, the processor is caused to perform the method according to any one of claims 1 to 7, the processor is caused to perform the method according to any one of claims 8 to 12, the processor is caused to perform the method according to any one of claims 13 to 20, or the processor is caused to perform the method according to claim 21 or claim 22.
